# EUROPÄISCHE PATENTSCHRIFT

(11) **EP 4 452 533 B1**
(45) Veröffentlichungstag und Bekanntmachung des Hinweises auf die Patenterteilung: **21.01.2026**
(21) Anmeldenummer: 22840114.7
(22) Anmeldetag: 19.12.2022
(51) Int. Cl.: B21J 15/32, B23P 19/00, B23P 19/06, B21J 15/10, F16B 37/06

(54) **SYSTEME ZUR VERARBEITUNG VON ELEMENTEN**
SYSTEMS FOR PROCESSING ELEMENTS
SYSTÈMES DE TRAITEMENT D'ÉLÉMENTS

(30) Priorität: 22.12.2021 DE 102021134407
(43) Veröffentlichungstag der Anmeldung: 30.10.2024
(73) Patentinhaber: TOX PRESSOTECHNIK GmbH & Co. KG, 88250 Weingarten (DE)
(72) Erfinder: BADENT, Michael, 88250 Weingarten (DE); DIETZEL, Eberhard, 88250 Weingarten (DE); FISCHBACH, Axel, 88212 Ravensburg (DE); FREUDLING, Frederik, 88069 Tettnang (DE); KALETTA, Patrick, 88048 Friedrichshafen (DE)
(74) Vertreter: RavensPAT Patentanwälte Partnerschaft mbB
(86) Internationale Anmeldenummer: PCT/EP2022/086616
(87) Internationale Veröffentlichungsnummer: WO 2023/117880

(56) Entgegenhaltungen:
- JP-A- 2007 222 924
- JP-A- H 081 454
- US-A- 4 074 425
- US-A1- 2002 153 227

## Beschreibung

### Stand der Technik

Es sind Systeme zur Verarbeitung von Elementen bekannt. Das System weist zum Beispiel System-Teileinheiten auf, umfassend eine die Elemente bereitstellenden Zuführvorrichtung, ein Verarbeitungsgerät und eine hohle Transportleitung für den Transport der Elemente von der Zuführvorrichtung zum Verarbeitungsgerät.

Die kleinteiligen Elemente sind zum Beispiel Fügelemente wie Funktions- oder Verbindungselemente wie Nieten und dergleichen.

Die Elemente werden zum Beispiel dem Verarbeitungsgerät bzw. dem Werkzeug zugeführt, wobei beispielsweise zur Abholung einzelner Elemente aus einer Element-Vorlagemenge und zur automatisierten Elementen-Zuführung ein verdichtetes Gas zum Beispiel Druckluft als Transportmittel bzw. als Energieträger z. B. zum Transport der Elemente verwendet wird.

Druckluft kommt in Pneumatiksystemen zum Einsatz, die beispielsweise eine Zylinder-Kolben-Baueinheit aufweisen, welche die Druckluft als Energieträger nutzt. Die Bereitstellung der Druckluft wird bei Industrieanwendungen zentral bereitgestellt und den unterschiedlichen Abnehmern zum Beispiel an verschiedenen Einsatzorten zugeführt. Zur Verdichtung der Luft werden beispielsweise insbesondere Verdichter bzw. Kompressoren eingesetzt.

Nachteilig bei vielen Druckluft-Anwendungen ist, dass Druckluft als Energieträger inneffizient ist und Verluste bzw. Energieverluste im Bereich bis über 90 Prozent auftreten. In der Folge ergeben sich daraus vergleichsweise hohe Betriebskosten. Daher wird Druckluft als Energieträger traditionell kritisch bewertet. Mit Blick auf zum Beispiel die globale Klimakrise steht Druckluft als Energieträger ebenfalls als ineffizient in der Kritik.

### Aufgabe und Vorteile der Erfindung

Aufgabe der vorliegenden Erfindung ist es, ein System zur Verarbeitung von Elementen bereitzustellen, bei dem die diskutierten Nachteile minimiert oder vermeidbar sind.

Diese Aufgabe wird durch die unabhängigen Ansprüche gelöst. In den abhängigen Ansprüchen sind zweckmäßige und vorteilhafte Weiterbildungen thematisiert.

Die Erfindung geht aus von einem System zur Verarbeitung von Elementen, umfassend eine Zuführvorrichtung, ein Verarbeitungsgerät und eine hohle Transportleitung, wobei die Zuführvorrichtung und das Verarbeitungsgerät über die hohle Transportleitung miteinander verbunden sind, wobei das Verarbeitungsgerät zur Verarbeitung von Elementen ausgebildet ist, wobei die Zuführvorrichtung ausgebildet ist, eine Mehrzahl von Elementen aufzunehmen und an die hohle Transportleitung zu übergeben, wobei die Elemente über die hohle Transportleitung zum Verarbeitungsgerät transportierbar sind, um das Verarbeitungsgerät mit den Elementen zu versorgen, wobei eine pneumatisch betriebene Systemkomponente zum Betrieb der Zuführvorrichtung und/oder zum Betrieb des Verarbeitungsgeräts vorhanden ist. Das System ist zum Beispiel als ein Technologiesystem ausgebildet, z. B. als Teil einer Produktionsstätte beispielsweise zum Setzen von Nieten oder Funktionselementen an einem Werkstück.

Als Elemente kommen zum Beispiel Verbindungselemente bzw. Fügeelemente wie Schrauben und Nieten, Stanznieten, Clinch-Nieten und/oder Funktionselemente wie Stanz-, Einstanz-, Einpress-, Einpräge-Muttern und/oder Stanz-, Einstanz-, Einpress-, Einpräge-Bolzen in Betracht. Damit ist die Zuführvorrichtung vielseitig und flexibel für unterschiedliche Setzaufgaben verwendbar. Mit der Zuführvorrichtung lässt sich ein zugehöriges Verarbeitungsgerät über die Transportleitung mit den jeweiligen Elementen versorgen.

Das Verarbeitungsgerät ist zum Beispiel ein Werkzeug wie z. B. ein Setzwerkzeug bzw. ein Press-, Stanz- und/oder ClinchWerkzeug. Das Verarbeitungsgerät ist zum Beispiel ein Werkzeug zum Clinchen, Nieten, Stanznieten und/oder Einpressen von Elementen wie z. B. Funktionselementen und anderen einpressbaren Elementen. Das Verarbeitungsgerät ist insbesondere ausgebildet, Elemente aufzunehmen, zum Beispiel aus der Transportleitung wie z. B. einem Transportkanal oder einem Zuführschlauch aufzunehmen, und weiterzuverarbeiten und an einem Werkstück anzubringen. Beispielsweise sind die Elemente mit dem Verarbeitungsgerät an einem ein- oder mehrlagigen Bauteil zum Beispiel einpressbar und/oder einstanzbar.

Das Werkstück ist in der Regel mit haltenden und/oder positionsgebenden Mitteln wie z. B. Spann-Mitteln positioniert zum Beispiel befestigt. Der Betrieb und die Bedienung der Mittel wie das Öffnen und Lösen der Mittel bzw. der Spannmittel erfolgt zum Beispiel pneumatisch. Alternativ sind elektrisch betriebene Spannmittel möglich.

Die Zuführvorrichtung, zum Beispiel ein Zuführgerät oder eine Zuführanordnung, ist derart ausgebildet, die Elemente aus einer Anlieferungsform, wie zum Beispiel als Schüttgut bzw. geschüttet bzw. mit undefinierter räumlicher Orientierung aufzunehmen und weiterzugeben. Die Zuführvorrichtung ist insbesondere ausgebildet, die Elemente zumindest im Wesentlichen in eine definierte Orientierung oder Anordnung und in die Transportleitung zu bringen für einen Weitertransport zum Verarbeitungsgerät.

Der Kern der Erfindung liegt darin, dass das System eine Gasverdichter-Einheit zur Erzeugung und zur Bereitstellung von verdichteter und/oder beschleunigter Druckluft umfasst, wobei die Gasverdichter-Einheit in einem Aufstellungsraum vorhanden ist, in welchem das System untergebracht ist, wobei die Gasverdichter-Einheit ausgebildet ist, Luft aus der Umgebung des Verarbeitungsgeräts und/oder aus der Umgebung der Zuführvorrichtung im Aufstellungsraum anzusaugen und verdichtete und/oder beschleunigte Druckluft für die pneumatisch betreibbare Systemkomponente zum Betrieb des Systems bereitzustellen. Die Gasverdichter-Einheit ist zum Beispiel ausgebildet zur Erzeugung eines verdichteten und/oder beschleunigten Gas-Volumens, welches die Druckluft bildet. Unter Druckluft bzw. Gasdruck ist ein Gasvolumen zu verstehen, das beispielsweise in einem nach außen umgrenzten Gasraum vorhanden ist. Das Gasvolumen ist ein statisches Gasvolumen oder ein dynamisches bzw. ein sich bewegendes Gasvolumen. Druckluft weist **z. B.** ein Druckniveau auf, das vergleichsweise gering über dem umgebenden bzw. atmosphärischen Druckniveau liegt, zum Beispiel 10%, 20% oder 30 % darüber, zum Beispiel 10 % bis 30 % über einem mittleren Druckniveau von ungefähr 1 bar. Druckluft umfasst auch ein Gas- bzw. Luftvolumen, das z. B. ein Druckniveau aufweist, das einem Vielfachen des Umgebungsdrucks entspricht, wie z. B. 2 bis 10 bar, bis zu einem Druckniveau von über hundert oder bis über mehrere hundert bar, das technisch aus Umgebungsluft mit Umgebungsdruck erzeugbar bzw. sicher bereitstellbar ist.

Beispielsweise ist die Gasverdichter-Einheit ausgebildet, Luft aus der Umgebung des Verarbeitungsgeräts und/oder aus der Umgebung der Zuführvorrichtung im Aufstellungsraum anzusaugen und verdichtete und/oder beschleunigte Druckluft für die pneumatisch betreibbare Systemkomponente zum Betrieb der Zuführvorrichtung und/oder zum Betrieb des Verarbeitungsgeräts bereitzustellen.

Beispielsweise, nicht erfindungsgemäß, umfasst das System genau eine Gasverdichter-Einheit. Beispielsweise, nicht erfindungsgemäß, umfasst das System genau eine Gasverdichter-Einheit, welche mehrere Verarbeitungsgeräte mit Druckluft versorgt. Zum Beispiel wird eine jeweilige Systemkomponente eines Verarbeitungsgeräts mit Druckluft versorgt. Zum Beispiel, nicht erfindungsgemäß, werden von der genau einen Gasverdichter-Einheit mehrere Systemkomponenten gleichzeitig mit Druckluft versorgbar.

Beispielsweise umfasst das System zwei, drei, vier oder fünf Verarbeitungsgeräte. Beispielsweise weist jedes Verarbeitungsgerät zumindest eine pneumatisch betreibbare Systemkomponente auf. Zum Beispiel, nicht erfindungsgemäß, werden einzelne oder sämtliche pneumatisch betreibbare Systemkomponente der zwei, drei, vier oder fünf Verarbeitungsgeräte von der genau einen Gasverdichter-Einheit versorgt mit Druckluft. Beispielsweise versorgt die Gasverdichter-Einheit genau eine pneumatisch betreibbare Systemkomponente oder versorgt mehrere oder sämtliche pneumatisch betreibbare Systemkomponenten des Systems.

Beispielsweise umfasst das System zwei, drei, vier oder fünf Zuführvorrichtungen mit einer pneumatisch betreibbaren Systemkomponente oder mit mehreren pneumatisch betreibbaren Systemkomponenten. Zum Beispiel umfassen die mehreren Zuführvorrichtungen genau eine Gasverdichter-Einheit, nicht erfindungsgemäß, oder genau zwei Gasverdichter-Einheit. Zum Beispiel weisen mehrere Zuführvorrichtungen jeweils genau eine Gasverdichter-Einheit auf. Zum Beispiel weist jede der mehreren Zuführvorrichtungen genau eine Gasverdichter-Einheit auf.

Zum Beispiel umfasst die Zuführvorrichtung eine Gasverdichter-Einheit. Zum Beispiel umfasst das Verarbeitungsgerät eine Gasverdichter-Einheit. Zum Beispiel ist die Gasverdichter-Einheit als zur Zuführvorrichtung und zum Verarbeitungsgerät separate Einheit vorhanden. Beispielsweise ist die Gasverdichter-Einheit zur Zuführvorrichtung und zum Verarbeitungsgerät separat in dem Aufstellungsraum vorhanden, z. B. mobil oder stationär vorhanden.

Beispielsweise versorgt genau eine Gasverdichter-Einheit des Systems zwei Verarbeitungsgeräte des Systems, drei Verarbeitungsgeräte des Systems, vier Verarbeitungsgeräte des Systems mit Druckluft oder fünf Verarbeitungsgeräte des Systems. Beispielsweise versorgt genau eine Gasverdichter-Einheit des Systems zwei oder mehr als zwei pneumatisch betreibbare Systemkomponenten des Systems mit Druckluft.

Beispielsweise ist genau eine, nicht erfindungsgemäß, oder sind genau zwei oder genau drei oder genau vier Gasverdichter-Einheiten in einem System vorhanden. Beispielsweise ist die genau eine oder sind die genau zwei oder genau drei oder genau vier Gasverdichter-Einheiten in einem System zum Beispiel als Teil einer Zuführvorrichtung und/oder als Teil eines Verarbeitungsgerätes und/oder als separate Gasverdichter-Einheit außerhalb einer Zuführvorrichtung und/oder außerhalb eines Verarbeitungsgerätes vorhanden.

Beispielsweise umfasst die Zuführvorrichtung eine pneumatisch betreibbare Systemkomponente oder mehrere pneumatisch betreibbare Systemkomponenten, wobei die eine oder die mehreren Systemkomponenten von genau einer Gasverdichter-Einheit des Systems mit Druckluft versorgbar ist.

Beispielsweise umfasst das Verarbeitungsgerät eine pneumatisch betreibbare Systemkomponente oder mehrere pneumatisch betreibbare Systemkomponenten, wobei die eine oder die mehreren Systemkomponenten von genau einer Gasverdichter-Einheit des Systems mit Druckluft versorgbar sind.

Beispielsweise umfasst das Verarbeitungsgerät eine pneumatisch betreibbare Systemkomponente, wie zum Beispiel einen Druckluftverbraucher. Beispielsweise umfasst das Verarbeitungsgerät eine pneumatisch betreibbare Systemkomponente, die als Spann-Systemkomponente zum Spannen bzw. zum Festhalten des Werkstücks oder von mehreren Werkstücklagen des Werkstücks ausgebildet ist.

Die vorgeschlagenen Architektur des Systems umfasst eine dezentraler Druckluftbereitstellung vor Ort .Das vorgeschlagene System bildet ein Gegenkonzept zu einer zentralen Druckluftbereitstellung. Damit lassen sich die Nachteile der zentral bereitgestellten Druckluft als Energieträger vermeiden. Die bisherigen Verluste bzw. Energieverluste einer zentralen Druckluftversorgung werden vermieden oder zumindest minimiert. Außerdem lassen sich die Betriebskosten im Vergleich zu Systemen mit zentraler Druckluftversorgung senken. Bei dem vorgeschlagenen System sind durch die örtliche Nähe der Gasverdichter-Einheit zur Verbrauchstelle der Druckluft insbesondere Leckage-und/oder Leitungsverluste minimierbar. Beispielsweise lassen sich Überkompressionsverluste minimieren, wodurch erhebliche Einsparpotentiale gegenüber einer zentralen Druckluftversorgung erzielbar sind.

Beispielsweise können für unterschiedliche Anforderungen an die Druckluftversorgung einer Systemkomponente, was das Druckniveau und/oder den Volumenstrom der bereitgestellten Druckluft angeht, technisch vorteilhaft verschiedene Verdichterprinzipien genutzt werden. Damit lassen sich die jeweiligen ausgewählten Verdichterprinzipien zielgerichtet und passend zur jeweiligen Anwendung nutzen.

Mit der Gasverdichter-Einheit, bzw. zum Beispiel einer Gaskompressionseinheit, wird Gas, in der Regel konkret Luft aus der unmittelbaren Umgebung des Verarbeitungsgeräts und/oder der Zuführvorrichtung im Aufstellungsraum angesaugt. Die angesaugte Umgebungsluft weist einen Umgebungs-Luftdruck bzw. atmosphärischen Druck auf z. B. einen Umgebungs-Luftdruck von circa 1 bar.

Die Gasverdichter-Einheit ist ausgebildet, das Gas-Volumen mit einem vorgebbaren Druckluftvolumen und/oder einem vorgebbaren Druckniveau bereitzustellen.

Mit der Druckluft sind zum Beispiel die Elemente pneumatisch transportierbar mittels des Gas-Volumens wie einer Gas-Strömung. Der Drucklufttransport findet in der Transportleitung statt, so dass die Elemente in der Transportleitung zum Verarbeitungsgerät gelangen.

Die Druckluft für die pneumatisch betreibbare Systemkomponente der Zuführvorrichtung wird beispielsweise direkt in der Zuführvorrichtung bzw. Zuführanordnung erzeugt und nicht aus einem sonstigen Druckluftsystem. Die Druckluftbereitstellung erfolgt, ohne dass von außen zugeführte Druckluft notwendig ist. Es kann im System insbesondere komplett auf eine zum Beispiel zentrale oder von außen ankommende und angeschlossene Druckluftversorgung verzichtet werden.

Insgesamt sind mit dem vorgeschlagenen System Verluste vermeidbar, wie Überkompressionsverluste, Leitungsnetzverluste bzw. Leitungsnetz-Druckverluste und/oder Leckageverluste. Durch eine Kontrolle bzw. eine Regelbarkeit der Gasverdichter-Einheit wird eine dynamische und exakt bedarfsangepasste Drucklufterzeugung möglich. Ein für die pneumatisch betreibbare Systemkomponente exakt benötigtes Druckluftvolumen und/oder Druckniveau ist vorteilhaft vorgebbar.

Die Systemkomponente stellt z. B. einen Druckluft-Verbraucher dar.

Das System weist zum Beispiel genau eine Systemkomponente auf. In der Regel sind mehrere solcher Systemkomponenten im System vorhanden. Das System weist zum Beispiel mehrere pneumatisch betreibbare Systemkomponenten auf. Dabei sind mehrere unterschiedliche Konfigurationen möglich. Zum Beispiel ist genau eine Gasverdichter-Einheit genau einer Systemkomponente zugeordnet. Alternativ oder zusätzlich ist genau eine Gasverdichter-Einheit mehreren Systemkomponenten zugeordnet. Die genau eine Gasverdichter-Einheit versorgt z. B. genau zwei oder genau drei oder mehr als drei Systemkomponenten mit Druckluft. Auch denkbar ist, dass mehrere Gasverdichter-Einheiten z. B. genau zwei Gasverdichter-Einheiten genau einer pneumatisch betreibbaren Systemkomponente zugeordnet sind. Es ist beispielsweise möglich, dass die mehreren bzw. z. B. genau zwei Gasverdichter-Einheiten gleichzeitig arbeiten und gleichzeitig die genau eine zugeordnete Systemkomponente mit Druckluft versorgen. Es ist beispielsweise möglich, dass von den mehreren bzw. von den z. B. genau zwei Gasverdichter-Einheiten immer nur genau eine Gasverdichter-Einheit arbeitet und die genau eine zugeordnete Systemkomponente mit Druckluft versorgt.

Zum Beispiel sind mehrere Gasverdichter-Einheiten z. B. genau zwei Gasverdichter-Einheiten mehreren Systemkomponenten zugeordnet. Beispielsweise versorgen zwei oder mehr Gasverdichter-Einheiten zwei oder mehr Systemkomponenten mit Druckluft. Die Versorgung von mehreren Systemkomponenten mit Druckluft kann simultan erfolgen, mit genau einer aktiven oder mit mehreren aktiven Gasverdichter-Einheiten.

Beispielsweise, nicht erfindungsgemäß, ist genau eine Gasverdichter-Einheit vorgesehen, welche erzeugte Druckluft bereitstellt, so dass mit der genau einen Gasverdichter-Einheit Elemente in der Transportleitung transportierbar sind und/oder eine Systemkomponente bedienbar ist. Beispielsweise sind mehrere Systemkomponenten mit Druckluft versorgbar. Mit Druckluft der z. B. genau einen Gasverdichter-Einheit sind die Elemente über die Transportleitung zum Verarbeitungsgerät zuführbar und z. B. über jeweils eine dazugehörige weitere Druckluftleitung ist die jeweilige weitere Systemkomponente mit Druckluft versorgbar. Zum Beispiel sind die mehreren Systemkomponenten mit einer jeweiligen Druckluftleitung mit Druckluft von der genau einen Gasverdichter-Einheit versorgbar.

Die Gasverdichter-Einheit kann als separate Einheit in der Umgebung des Verarbeitungsgeräts aufgestellt sein oder Teil einer Zuführvorrichtung sein.

Beispielsweise ist zusätzlich zur Transportleitung für den pneumatischen Transport von Elementen zum Verarbeitungsgerät eine gesonderte weitere Druckluftleitung zwischen der Gasverdichter-Einheit und einer Systemkomponente des Verarbeitungsgeräts oder einer Systemkomponente, die am Verarbeitungsgerät vorhanden ist, vorgesehen. Die Systemkomponente ist beispielsweise ein Bewegungsantrieb. Zum Beispiel ist die gesonderte weitere Druckluftleitung für die Zuführung von Druckluft, die von der genau einen Gasverdichter-Einheit bereitgestellt wird, zum Bewegungs-Antrieb eines bewegbar antreibbaren Stempels des Verarbeitungsgeräts vorgesehen. Zum Beispiel dient die über die gesonderte weitere Druckluftleitung zugeführte Druckluft zum pneumo-hydraulischen und/oder zum pneumatischen Bewegungsantrieb eines Stempels des Verarbeitungsgeräts. Zum Beispiel ist eine gesonderte weitere Druckluftleitung oder sind mehrere gesonderte weitere Druckluftleitungen zwischen der Gasverdichter-Einheit und dem Verarbeitungsgerät vorhanden. Eine Druckluftleitung ist zum Beispiel zum pneumatischen Betrieb einer Systemkomponente des Verarbeitungsgeräts oder einer Systemkomponente am Verarbeitungsgerät vorgesehen.

Auch andere Abwandlungen dieser Varianten sind möglich. Alternativ wird auch ein System zum Durchsetzfügen eines Materials vorgeschlagen, umfassend ein Durchsetzfügegerät, wobei das Durchsetzfügegerät zum Durchsetzfügen ausgebildet ist, wobei das System in einem Aufstellungsraum vorhanden ist,
wobei eine pneumatisch betreibbare Systemkomponente zum Betrieb des Durchsetzfügegeräts vorhanden ist. Das System umfasst eine Gasverdichter-Einheit zur Erzeugung und zur Bereitstellung eines verdichteten und/oder beschleunigten Gas-Volumens, wobei die Gasverdichter-Einheit im Aufstellungsraum vorhanden ist, wobei die Gasverdichter-Einheit ausgebildet ist, Luft aus der Umgebung des Durchsetzfügegeräts im Aufstellungsraum anzusaugen und verdichtete und/oder beschleunigte Druckluft für die pneumatisch betreibbare Systemkomponente zum Betrieb des Durchsetzfügegeräts bereitzustellen.

Dabei lassen sich bei einem System mit einem Durchsetzfügegerät die oben dargelegten Vorteile erzielen bzw. die diskutierten Nachteile bei Systemen mit zentraler Druckluftversorgung vermeiden.

Das Durchsetzfügegerät wie zum Beispiel ein Clinchwerkzeug oder ein Durchsetzfügewerkzeug weist beispielsweise einen pneumatischen Antrieb, einen hydropneumatischen Antrieb bzw. einen pneumohydraulischen Antrieb auf. Die Gasverdichter-Einheit dient zum Beispiel zur Versorgung des pneumatischen oder hydropneumatischen bzw. pneumohydraulischen Antriebs mit Druckluft.

Die Gasverdichter-Einheit ist beispielsweise separat zum oder integriert am Verarbeitungsgerät vorhanden, zum Beispiel separat zum Durchsetzfügewerkzeug oder daran aufgenommen vorhanden.

Beispielsweise ist das Verarbeitungsgerät ein Setzwerkzeug, Clinchwerkzeug, Nietwerkzeug, Stanznietwerkzeug und/oder Einpresswerkzeug. Als Antrieb für das Verarbeitungsgerät wie z. B. ein Setzgerät bzw. für das Setzwerkzeug, Clinchwerkzeug, Nietwerkzeug, Stanznietwerkzeug und/oder Einpresswerkzeug ist auch ein elektrischer Antrieb, wie z. B. ein Elektromotor möglich.

Das Durchsetzfügegerät ist zum Beispiel an einem Roboterarm eines Roboters aufgenommen und im Raum bewegbar und kontrollierbar. Alternativ ist das Durchsetzfügegerät fest positioniert im Aufstellungsraum.

Erfindungsgemäß wird vorgeschlagen, dass mehrere Gasverdichter-Einheiten vorhanden sind. Damit ist das System variabel errichtbar z. B. anpassbar an das benötigte Druckluft-Volumen bzw. an das geforderte Druckniveau der Druckluft. Außerdem ist das System anpassbar an die Anzahl der Verbraucher bzw. an die Anzahl der pneumatischen Systemkomponenten oder an die Anzahl der Zuführvorrichtungen und/oder an die Anzahl der Verarbeitungsgeräte und/oder an die Anzahl der Durchsetzfügegeräte.

Das System weist zum Beispiel genau zwei, genau drei, genau vier oder mehr als vier Gasverdichter-Einheiten auf. Damit lässt sich ein System flexibel ausstatten, zum Beispiel wenn mehrere unterschiedliche oder mehrere gleiche Systemkomponenten zum Betrieb der Zuführvorrichtung und/oder zum Betrieb des Verarbeitungsgeräts vorhanden sind. Zwei oder mehr als zwei oder alle, nicht erfindungsgemäß, der mehreren Gasverdichter sind zum Beispiel identisch in der Konstruktion wie z. B. der Bauart. Zwei oder mehr als zwei oder alle, nicht erfindungsgemäß, der mehreren Gasverdichter sind zum Beispiel identisch im Funktionsprinzip wie z.B. im Wirkprinzip. Zwei oder mehr als zwei oder alle der mehreren Gasverdichter sind identisch oder unterschiedlich in der Leistungsstufe.

Alternativ ist die genau eine Systemkomponente von genau zwei oder mehr als zwei Gasverdichter-Einheiten gleichzeitig mit einer jeweiligen Druckluft bzw. einem jeweiligen Druckluftstrom versorgbar.

Es ist nicht ausgeschlossen, das für genau einen Verbraucher bzw. dass für genau eine pneumatische Systemkomponente z. B. genau zwei Gasverdichter-Einheiten zur Versorgung der Systemkomponente mit Druckluft vorgesehen sind. Die genau eine Systemkomponente ist zum Beispiel immer nur von genau einer Gasverdichter-Einheit der zwei oder mehr Gasverdichter-Einheiten mit Druckluft versorgbar.

Erfindungsgemäß sind zwei oder mehr als zwei oder sämtliche der mehreren Gasverdichter zum Beispiel unterschiedlich im Wirkprinzip bzw. in der Bauart. Zwei oder mehr als zwei oder sämtliche der mehreren Gasverdichter sind zum Beispiel unterschiedlich in der Leistungsstufe.

Beispielsweise umfasst die pneumatisch betreibbare Systemkomponente zum Betrieb des Verarbeitungsgeräts eine Element-Befüllstation und/oder eine Werkzeug-Wechselstation. Beispielsweise sind die Element-Befüllstation und/oder die Werkzeug-Wechselstation temporär entfernt vom bzw. beabstandet zum Bearbeitungsgerät vorhanden, aber in der gleichen Arbeitsumgebung vorhanden. Beispielsweise für die Befüllung mit Elementen und den Wechsel eines Werkzeuges sind die Element-Befüllstation bzw. die Werkzeug-Wechselstation z. B. temporär mit dem Verarbeitungsgerät koppelbar.

Zum Beispiel dient die Element-Befüllstation, z B. eine Nietelement-Befüllstation, zum Befüllen eines Elementvorratsbehälters wie z. B. eines Element-Magazins an dem Verarbeitungsgeräts. Beispielsweise weist die Element-Befüllstation eine Mehrzahl von Elementen auf. Mittels der von der Gasverdichter-Einheit bereitgestellten Druckluft ist die Element-Befüllstation pneumatisch betreibbar, beispielsweise über eine pneumatische Verbindung zwischen der Gasverdichter-Einheit und der Element-Befüllstation. Die Gasverdichter-Einheit ist beispielsweise Teil der Zuführvorrichtung. Alternativ ist die Gasverdichter-Einheit außerhalb der Zuführstation vorgesehen. Beispielsweise sind die Elemente pneumatisch von der Element-Befüllstation zum Verarbeitungsgerät überführbar. Beispielsweise sind im gekoppelten Zustand von Element-Befüllstation und Verarbeitungsgerät die Elemente von der Element-Befüllstation zu einem Element-Speicher, der beispielsweise dauerhaft am Verarbeitungsgerät verbleibt, überführbar. Beispielsweise wird ein Schieber der Element-Befüllstation pneumatisch betrieben.

Zum Überführen der Elemente von der Element-Befüllstation zum Verarbeitungsgerät bzw. zum Element-Speicher wird das Verarbeitungsgerät an die positionsfeste Element-Befüllstation heranbewegt und in einen miteinander gekoppelten Zustand gebracht und nach dem Überführen wird das Verarbeitungsgerät wieder wegbewegt von der Element-Befüllstation. Es ist auch möglich, dass zum Überführen der Elemente die Element-Befüllstation zum Verarbeitungsgerät bzw. zum Element-Speicher am Verarbeitungsgerät heranbewegt wird und nach dem Überführen vom Verarbeitungsgerät wieder wegbewegt wird.

Zum Beispiel ist es mit der Werkzeug-Wechselstation möglich, ein Werkzeug des Verarbeitungsgeräts durch ein anderes Werkzeug, das an der Werkzeug-Wechselstation vorhanden ist, auszutauschen bzw. zu wechseln. Hierbei findet eine **z. B.** temporäre Kopplung von Werkzeug-Wechselstation und Verarbeitungsgerät statt. Beispielsweise wird das Werkzeug vom Verarbeitungsgerät entfernt und durch ein Werkzeug an der Werkzeug-Wechselstation ersetzt. Das Werkzeug vom Verarbeitungsgerät wird zum Beispiel dabei von der Werkzeug-Wechselstation aufgenommen. Zum Wechseln eines Werkzeugs im gekoppelten Zustand, indem ein Werkzeug von der Werkzeug-Wechselstation an das Verarbeitungsgerät angebracht wird, wobei das zuvor vorhandene Werkzeug am Verarbeitungsgerät abgenommen wird, wird **z. B.** das Verarbeitungsgerät an die Werkzeug-Wechselstation heranbewegt und nach dem Überführen wieder wegbewegt. Es ist auch umgekehrt möglich, dass zum Werkzeugwechsel die Werkzeug-Wechselstation an das Verarbeitungsgerät heranbewegt und nach dem Wechsel der Werkzeuge vom Verarbeitungsgerät wieder wegbewegt wird.

Zum Beispiel, nicht erfindungsgemäß, ist genau eine Gasverdichter-Einheit vorgesehen, welche ausgebildet ist, mehrere pneumatisch betreibbare Systemkomponenten mit verdichteter und/oder beschleunigter Druckluft zu versorgen. Zum Beispiel, nicht erfindungsgemäß, ist genau eine Gasverdichter-Einheit vorgesehen, welche ausgebildet ist, mehrere gleichartige und/oder mehrere unterschiedliche pneumatisch betreibbare Systemkomponenten mit verdichteter und/oder beschleunigter Druckluft zu versorgen.

Beispielsweise ist mit der von der Gasverdichter-Einheit bereitgestellten Druckluft eine pneumatisch betriebene Systemkomponente an dem Verarbeitungsgerät bedienbar oder mehrere pneumatische Systemkomponenten an dem Verarbeitungsgerät. Beispielsweise ist mit der von der Gasverdichter-Einheit bereitgestellten Druckluft eine pneumatisch betriebene Systemkomponente betreibbar, die temporär mit dem Verarbeitungsgerät koppelbar ist oder dauerhaft an dem Verarbeitungsgerät vorhanden ist.

Zum Beispiel umfasst die Zuführvorrichtung genau eine Gasverdichter-Einheit, mit der Druckluft zum Betrieb mehrerer pneumatischer Systemkomponenten bereitstellbar ist. Zum Beispiel stellt die genau eine Gasverdichter-Einheit, wie **z. B.** genau ein Kompressor, Druckluft bereit, wobei die Druckluft zum Betrieb der Element-Befüllstation, der Werkzeug-Wechselstation einer pneumatischen Systemkomponente am Verarbeitungsgerät, wie z. B. eines pneumatischen Antriebs für einen Stempel des Verarbeitungsgeräts und/oder für den pneumatischen Transport von Elementen von der Zuführvorrichtung über die Transportleitung zum Verarbeitungsgerät dient. Beispielsweise werden dabei zwei, drei oder vier unterschiedliche Systemkomponenten mit Druckluft mit der genau einen Gasverdichter-Einheit versorgt. Beispielsweise sind mehrere Pneumatik-Bauteile wie z. B. Steuer- und/oder Regelventile im System zur z. B. von der Kontrolleinheit kontrollierten Bereitstellung der Druckluft vorhanden. Die Pneumatik-Bauteile sind mit der von der Gasverdichter-Einheit bereitgestellten Druckluft bedienbar.

Eine Abwandlung ergibt sich dadurch, dass eine Gasverdichter-Einheit ausgebildet ist, Druckluft mit unterschiedlichen Druckniveaus bereitzustellen. Die unterschiedlichen Druckniveaus sind zeitlich vorgebbar bereitstellbar z. B. mittels einer System-Kontrolleinheit. Zum Beispiel kann genau eine betrachtete Gasverdichter-Einheit zum Beispiel mit der Kontrolleinheit oder mit Einstellmitteln eingestellt werden, dass die eine betrachtete Gasverdichter-Einheit die Druckluft mit einem jeweils notwendigen Druckniveau bereitstellt. Dabei ist es denkbar, dass die Gasverdichter-Einheit einen Verbraucher bzw. eine Systemkomponente mit unterschiedlichen Druckluft-Druckniveaus versorgt, z. B. genau eine Systemkomponente, die zeitlich abhängig jeweils ein unterschiedliches Druckniveau der Druckluft benötigt. Es ist auch denkbar, dass die Gasverdichter-Einheit wahlweise genau einen Verbraucher von zwei Verbrauchern bzw. wahlweise eine pneumatische Systemkomponente von zwei Systemkomponenten mit Druckluft versorgt, wobei die zwei Systemkomponenten jeweils ein anderes bzw. unterschiedliches Druckniveau der Druckluft benötigen. Die Gasverdichter-Einheit ist zum Beispiel schaltbar mit einer z. B. ersten Systemkomponente oder mit einer zweiten Systemkomponente verbindbar, so dass nur immer genau eine Systemkomponente von der Gasverdichter-Einheit mit der jeweiligen Druckluft mit jeweils passendem Druckniveau versorgbar ist. Dies ist z. B. vorteilhaft, wenn von mehreren pneumatischen Systemkomponenten immer nur genau eine pneumatische Systemkomponente arbeitet.

Erfindungsgemäß sind zumindest zwei Gasverdichter-Einheiten vorhanden, wobei sich die zwei Gasverdichter-Einheiten in der Konstruktion und/oder in dem Funktionsprinzip voneinander unterscheiden. Dies ermöglicht eine passende bzw. optimale Bedienung der Systemkomponenten mit einem jeweils notwendigen Volumenstrom der Druckluft und/oder mit einem jeweiligen Druckniveau der Druckluft.

Die zumindest zwei Gasverdichter-Einheiten weisen zum Beispiel eine Gasverdichter-Einheit auf, die nach dem dynamischen Verdichterprinzip arbeitet. Die zumindest zwei Gasverdichter-Einheiten weisen zum Beispiel eine Gasverdichter-Einheit auf, die nach dem dynamischen Verdichterprinzip arbeitet und einen Axial-Turboverdichter umfassen.

Die zumindest zwei Gasverdichter-Einheiten weisen zum Beispiel eine Gasverdichter-Einheit auf, die nach dem dynamischen Verdichterprinzip arbeitet und einen Radial-Turboverdichter umfassen.

Die zumindest zwei Gasverdichter-Einheiten weisen zum Beispiel eine Gasverdichter-Einheit auf, die nach dem Verdrängerprinzip arbeitet.

Die zumindest zwei Gasverdichter-Einheiten weisen zum Beispiel eine Gasverdichter-Einheit auf, die nach dem Verdrängerprinzip arbeitet und einen Rotationsverdichter und/oder einen Kolbenverdichter aufweist.

Eine beispielhafte Abwandlung des Systems besteht darin, dass eine Gasverdichter-Einheit vorhanden ist, die nach dem dynamischen Verdichterprinzip arbeitet, und dass eine Gasverdichter-Einheit vorhanden ist, die nach dem Verdrängerprinzip arbeitet. Damit ist das System flexibel an unterschiedliche Anforderungen hinsichtlich des Druckniveaus und/oder des Volumenstroms der Druckluft anpassbar. Zum Beispiel ist genau eine Verdichterprinzip-Gasverdichter-Einheit und genau eine Verdrängerprinzip-Gasverdichter-Einheit im System vorgesehen.

Bei dem dynamischen Verdichterprinzip wird Luft zwischen Flügeln eines sich schnell drehenden Verdichtungslaufrades angesaugt und auf eine hohe Geschwindigkeit beschleunigt. Das beschleunigte Gas bzw. die beschleunigte Luft wird dann durch einen Diffusor geleitet, wobei die kinetische Energie des Luftstroms in statischen Druck umgewandelt wird. Häufig sind Gasverdichter-Einheiten, welche nach dem dynamischen Verdichterprinzip arbeiten, z. B. dynamische Kompressoren wie zum Beispiel Turbokompressoren mit einem axialen Strömungsmuster oder mit einem radialen Strömungsmuster.

Beim Verdrängungsprinzip, nach dem zum Beispiel Kolbenkompressoren arbeiten, wird Luft in eine oder mehrere Verdichtungskammern gesaugt, dann deren Ansaugeinlass verschlossen und dann die jeweiligen Volumina der einzelnen Verdichtungskammern allmählich verringert. Die Luft wird dabei in den Verdichtungskammern verdichtet. Wenn der Druck in den Verdichtungskammern das gewünschte Druckniveau bzw. das gewünschte Druckverhältnis erreicht hat, wird ein Anschluss oder ein Ventil zu den Verdichtungskammern geöffnet. Dann strömt die verdichtete Luft aufgrund der weiterhin kontinuierlichen Verringerung des Volumens der Verdichtungskammern aus den Verdichtungskammern nach außen zur pneumatisch betreibbaren Systemkomponente. Die Luft strömt aus den Verdichtungskammern zum Beispiel in ein anschließendes Volumen zum Beispiel eines Auslasssystems. Die Luft strömt mit einem entsprechenden Druckniveau aus den Verdichtungskammern nach außen zur Systemkomponente.

Gemäß einer Variante ist die Gasverdichter-Einheit zur Bereitstellung eines Druckniveaus ausgebildet, das unter einem Druckniveau liegt, das 0,3 bar über einem Ausgangsdruck liegt, oder das unter einem Druckniveau liegt, das 0,2 bar über einem Ausgangsdruck liegt, oder das unter einem Druckniveau liegt, das 0,1 bar über einem Ausgangsdruck liegt, wobei die Gasverdichter-Einheit nach dem Verdrängerprinzip arbeitet. Der Ausgangsdruck spiegelt **z. B.** das Druckniveau der angesaugten Luft wieder und liegt regelmäßig im Bereich von 1 bar bzw. Umgebungsluftdruck.

Die Gasverdichter-Einheit ist zur Bereitstellung eines Druckniveaus ausgebildet, das einen absoluten Gasdruck von über 2 bar, von **z. B.** 3 bar oder von **z. B.** 4 bar oder von **z. B.** 5 bar oder von **z. B.** über 6 bar aufweist. Der absolute Gasdruck wird druckseitig der Gasverdichter-Einheit durch die verdichtete bzw. beschleunigte Druckluft bereitgestellt, also auslassseitig der Gasverdichter-Einheit. Beispielsweise ist die Gasverdichter-Einheit ausgebildet, die Druckluft einer temporär aber kontinuierlich aufnehmenden Systemkomponente zuzuführen. Beispielsweise ist die Gasverdichter-Einheit ausgebildet, Druckluft in einen Druckgas-Speicher zur Aufnahme von Druckluft zu speisen. Beispielsweise ist die Gasverdichter-Einheit ausgebildet, den Druckgas-Speicher zu speisen, so dass in dem Druckgas-Speicher ein vorgebbares Druckniveau des darin enthaltenen Gases, wie z. B. Luft, herrscht.

Die Gasverdichter-Einheit, die nach dem Verdrängerprinzip arbeitet, umfasst zum Beispiel einen Rotationsverdichter und/oder einen Kolbenverdichter.

Eine Modifikation zeichnet sich dadurch aus, dass die Gasverdichter-Einheit angepasst ist, eine der Gasverdichter-Einheit nachgeordnet vorhandene Systemkomponente mit einem im System höchsten Druckniveau zu versorgen.

Beispielsweise ist die Gasverdichter-Einheit angepasst, eine der Gasverdichter-Einheit nachgeordnet vorhandene Systemkomponente wie einen Druckluft-Verbraucher mit einem im System höchsten Druckniveau zu versorgen, wobei das von der Gasverdichter-Einheit erzeugte Druckniveau nicht höher als 10% ist, als ein tatsächlich von der Systemkomponente benötigtes Druckniveau. Dies ermöglicht eine hohe Betriebssicherheit.

Beispielsweise ist die Gasverdichter-Einheit angepasst, eine der Gasverdichter-Einheit nachgeordnet vorhandene Systemkomponente wie einen Druckluft-Verbraucher mit einem im System höchsten Druckniveau zu versorgen, wobei das von der Gasverdichter-Einheit erzeugte Druckniveau nicht höher als 20 % ist, als ein tatsächlich benötigtes Druckniveau der Systemkomponente.

Beispielsweise ist die Gasverdichter-Einheit angepasst, eine der Gasverdichter-Einheit nachgeordnet vorhandenes Systemkomponente wie einen Druckluft-Verbraucher mit einem im System höchsten Druckniveau zu versorgen, wobei das von der Gasverdichter-Einheit erzeugte Druckniveau nicht höher als 30 % ist, als ein tatsächlich benötigtes Druckniveau der Systemkomponente.

Beispielsweise ist die Gasverdichter-Einheit auf die mit der Gasverdichter-Einheit direkt nachgeordnet verbundene Systemkomponente wie einen Druckluft-Verbraucher angepasst, wobei die direkt nachgeordnete Systemkomponente bzw. der direkt nachgeordnet verbundenen Druckluft-Verbraucher das im System höchste Druckniveau betrifft, von sämtlichen im System vorhandenen Systemkomponenten bzw. Druckluft-Verbrauchern. Damit ist das erzeugte bzw. bereitgestellte Druckniveau der Druckluft nicht höher als 10% oder 20% oder 30% als ein Bedarf, zum Beispiel ein maximales von einer Systemkomponente des Systems benötigtes Druckniveau.

Zum Beispiel ist die Gasverdichter-Einheit angepasst, eine der Gasverdichter-Einheit nachgeordnet vorhandene Systemkomponente mit einem im System höchsten Druckniveau zu versorgen, wobei das Druckniveau im Betrieb dynamisch-flexibel anpassbar ist z. B. an ein variierendes benötigtes Druckniveau.

Nach einer beispielhaften Variante ist die Gasverdichter-Einheit als eine separate Teileinheit des Systems vorhanden. Dies ermöglicht eine variable Bedienung der Systemkomponenten bzw. der Abnehmer von Druckluft im System. Eine Teileinheit ist zum Beispiel mobil gestaltet, zum Beispiel von einer Person manuell bewegbar und/oder auch mit einem motorischen Bewegungs-Antrieb. Eine Teileinheit ist beispielsweise als eine separate Baueinheit gestaltet. Die Teileinheit ist zum Beispiel mit einem Gehäuse und/oder mit einer Plattform umfassend Rollen oder dergleichen räumlich z. B. im Aufstellungsraum bewegbar. Die Teileinheit kann an verschiedene mögliche Positionen wie z. B. Einsatzstellen im Aufstellungsraum bewegt und dort positioniert werden. Zur Verbindung der Teileinheit mit einer mit Druckluft versorgbaren Systemkomponente ist z. B. eine Druckluftleitung zwischen der Gasverdichter-Einheit der Teileinheit und dem Verbraucher bzw. der Systemkomponente vorhanden. Die Druckluftleitung dient zur Durchleitung der verdichteten und/oder beschleunigten Luft bzw. Druckluft von z. B. einer Druckseite der Gasverdichter-Einheit und z. B. einem Drucklufteinlass der Systemkomponente.

Bei den erfindungsgemäß mehreren zum System gehörenden Gasverdichter-Einheiten bzw. bei den erfindungsgemäß mehreren im System vorhandenen Gasverdichter-Einheiten ist zum Beispiel jede einzelne Gasverdichter-Einheit als eine separate Teileinheit ausgebildet. Alternativ oder zusätzlich sind genau zwei oder mehr als zwei Gasverdichter-Einheiten in einer Teileinheit aufgenommen. Die genau zwei oder mehr als zwei Gasverdichter-Einheiten in genau einer Teileinheit sind zum Beispiel identisch. Die genau zwei oder mehr als zwei Gasverdichter-Einheiten, in genau einer Teileinheit unterscheiden sich zum Beispiel voneinander. Erfindungsgemäß unterscheiden sich die unterschiedlichen Gasverdichter-Einheiten in zumindest der Bauart und/oder im Funktionsprinzip. Bei mehr als zwei Gasverdichter-Einheiten unterscheiden sich erfindungsgemäß zumindest zwei der mehreren Gasverdichter-Einheiten voneinander.

In genau einer Teileinheit ist zum Beispiel zumindest eine Gasverdichter-Einheit vorhanden, die nach dem dynamischen Verdichtungsprinzip arbeitet, und zumindest eine weitere Gasverdichter-Einheit vorhanden, die nach dem Verdrängerprinzip bzw. der Verdrängungsverdichtung arbeitet. Eine Teileinheit weist zum Beispiel einen Kolbenverdichter und zusätzlich einen Axial- und/oder einen Radialverdichter auf.

Die Teileinheit weist zum Beispiel in einer einfachen Konfiguration eine Gebläseeinheit oder eine Druckluftpumpe auf, die mit z. B. einem elektrischen Antrieb betreibbar sind.

Jede Gasverdichter-Einheit ist beispielsweise mit Einstellmitteln bzw. einer Kontrolleinheit zum Beispiel jeweils separat bzw. unabhängig von einer anderen Gasverdichter-Einheit in ihren Betriebseinstellungen einstellbar bzw. vorgebbar. Jede Gasverdichter-Einheit weist z. B. vorzugsweise einen eigenen zugehörigen Druckluft-Anschluss auf zum Beispiel zum Anschluss an eine druckseitig anschließende Druckluftleitung wie z. B. einen Druckluftschlauch.

Beispielsweise weist die Zuführvorrichtung eine Gasverdichter-Einheit auf. Die Gasverdichter-Einheit ist z. B. integraler Teil der Zuführvorrichtung oder daran anschließbar. Beispielsweise erfolgt ein Anschließen des anschließbaren Teils bzw. der Gasverdichter-Einheit an der Zuführvorrichtung über einen Leitungsanschluss für eine Druckluftleitung. Die Druckluftleitung verbindet druckluftführend die Gasverdichter-Einheit und die Zuführvorrichtung.

Beispielsweise weist die Zuführvorrichtung eine Gasverdichter-Einheit auf, die zum Beispiel als Gasstrom-Erzeugungseinrichtung ausgebildet ist. Die Gasverdichter-Einheit arbeitet zum Beispiel nach dem dynamischen Verdrängerprinzip. Die Zuführvorrichtung weist beispielsweise einen Axialverdichter und/oder einen Radialverdichter auf.

Die Zuführvorrichtung weist z. B. einen Vorratsbehälter zur Aufnahme einer Mehrzahl von Elementen auf. Die Zuführvorrichtung weist zum Beispiel einen hohlen Leitungsabschnitt auf, durch welchen die Elemente von einer Element-Übergabestelle, an welcher die Elemente in den Leitungsabschnitt einbringbar sind, zu einer Anschluss-Stelle der Zuführvorrichtung bewegbar sind, wobei die Zuführvorrichtung als eine separat positionierbare Peripherie-Einheit zur Versorgung eines Verarbeitungsgeräts mit Elementen ausgestaltet ist. Die im Leitungsabschnitt bewegbaren Elemente sind über die Anschluss-Stelle aus der Zuführvorrichtung ausschleusbar. Die Anschluss-Stelle ist für eine insbesondere gasdichte Verbindung des Leitungsabschnitts mit einer an die Zuführvorrichtung anschließbaren hohlen Transportleitung ausgebildet ist. Im verbundenen Zustand des Leitungsabschnitts und der Transportleitung sind die Elemente in der hohlen Transportleitung von der Anschluss-Stelle bis zum von der Zuführvorrichtung beabstandeten Verarbeitungsgerät transportierbar. Die Elemente sind mittels einer Gas-Strömung im Leitungsabschnitt bis zur Anschluss-Stelle transportierbar. Bevorzugt weist die Zuführvorrichtung die Gasverdichter-Einheit derart auf, dass die Gas-Strömung in dem Leitungsabschnitt derart bereitstellbar ist, dass aufgrund der Gas-Strömung die Elemente von der Element-Übergabestelle durch den Leitungsabschnitt an die Anschluss-Stelle bewegbar sind. Die Elemente sind von der Anschluss-Stelle aufgrund der mit der Gasverdichter-Einheit bereitgestellten Gas-Strömung aus dem Leitungsabschnitt hinaus transportierbar. Die Zuführvorrichtung ist zum Beispiel in einem Aufstellungsraum vorhanden. Die Gasverdichter-Einheit ist im Aufstellungsraum vorhanden, in dem das System untergebracht ist. Die Gasverdichter-Einheit ist ausgebildet, Luft aus der Umgebung der Zuführvorrichtung im Aufstellungsraum der Zuführvorrichtung anzusaugen, um verdichtete und/oder beschleunigte Druckluft bereitzustellen. Mit der Druckluft wird zum Beispiel die Gas-Strömung bereitzustellen. Die verdichtete und/oder beschleunigte Druckluft dient zum Betrieb der Zuführvorrichtung und/oder des Verarbeitungsgeräts.

Beispielsweise weist das Verarbeitungsgerät eine Gasverdichter-Einheit auf. Die Gasverdichter-Einheit ist z. B. integraler Teil des Verarbeitungsgeräts oder daran anschließbar.

Beispielsweise erfolgt ein Anschließen des anschließbaren Teils bzw. der Gasverdichter-Einheit an dem Verarbeitungsgerät über einen Leitungsanschluss für eine Druckluftleitung. Die Druckluftleitung verbindet druckluftführend die Gasverdichter-Einheit und das Verarbeitungsgerät.

Nach einer Modifikation weist die Gasverdichter-Einheit einen elektrischen Antrieb auf. Damit ist eine bewährte Antriebsart der Gasverdichter-Einheit möglich. Der elektrische Antrieb umfasst zum Beispiel einen Elektromotor.

Die Gasverdichter-Einheit weist zum Beispiel einen elektrischen Antrieb auf, wobei Mittel vorhanden sind, welche dem elektrischen Antrieb einen Anteil eines Energieüberschusses einer weiteren System-Teileinheit des Systems bereitstellt. Damit lässt sich ein energieeffizientes System bereitstellen.

Der Energieüberschuss ist beispielsweise zumindest ein Anteil einer Energiemenge einer weiteren System-Teileinheit des Systems. Die weitere System-Teileinheit des Systems ist zum Beispiel ein anderer Anlagenteil des Systems und/oder ein anderer Prozessschritt eines Prozesses innerhalb des Systems. Der Energieüberschuss ist beispielsweise zumindest ein Anteil einer Energiemenge als Energie aus einem anderen Anlagenteil des Systems und/oder eines anderen Prozessschrittes eines Prozesses innerhalb des Systems.

Beispielsweise weist die Gasverdichter-Einheit einen mechanischen Antrieb auf. Dies stellt eine robuste und einfache Antriebsvariante dar.

Gemäß einer weiteren Variante weist die Gasverdichter-Einheit einen mechanischen Antrieb auf, wobei Mittel vorhanden sind, welche einen Bewegungsanteil eine Bewegung einer weiteren System-Teileinheit des Systems für den mechanischen Antrieb der Gasverdichter-Einheit abgreift. Dies ist besonders energieeffizient.

### Figurenbeschreibung

Weitere Merkmale und Vorteile sind anhand der in den Figuren schematisiert dargestellten Ausführungsbeispiele näher erläutert. Im Einzelnen zeigt:
Fig. 1 ein schematisch dargestelltes System zur Verarbeitung von Elementen, umfassend eine Zuführvorrichtung, ein Verarbeitungsgerät und eine Transportleitung,
Fig. 2 die Anordnung gemäß Fig. 1 ohne Werkstücke und ohne Roboter,
Fig. 3 einen oberen Ausschnitt der Zuführvorrichtung aus

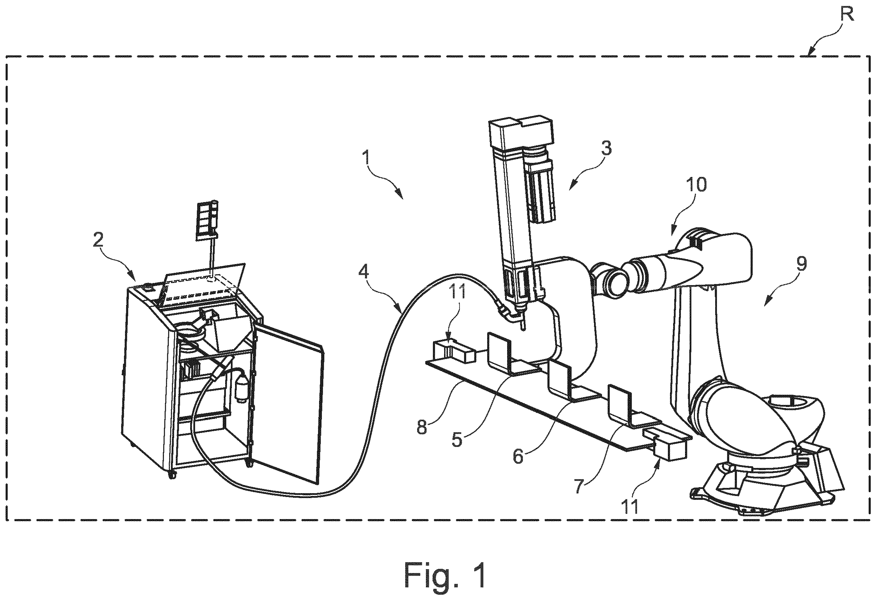

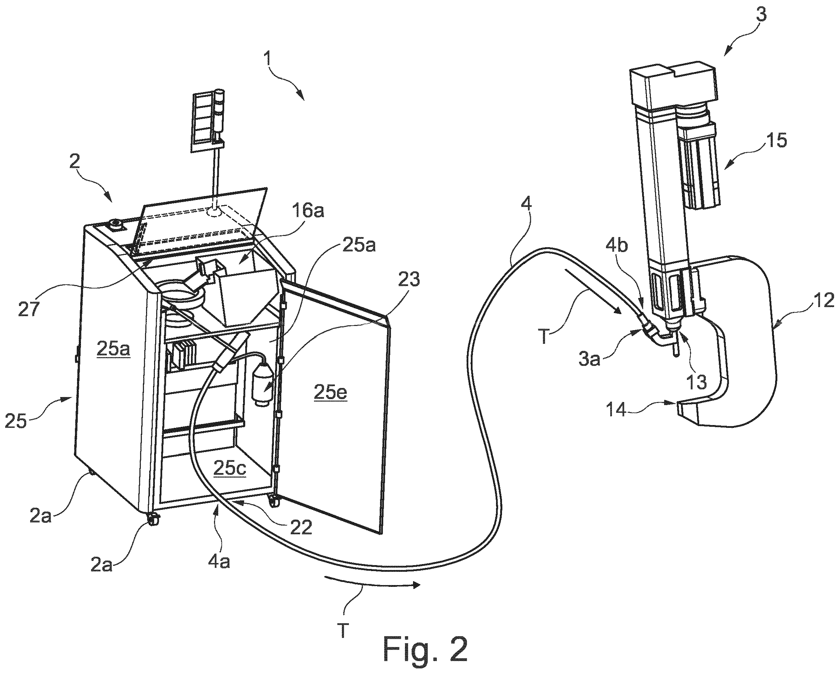

Fig. 1 und 2 in Vorderansicht ohne eine vorderseitige Vorrichtungstüre,

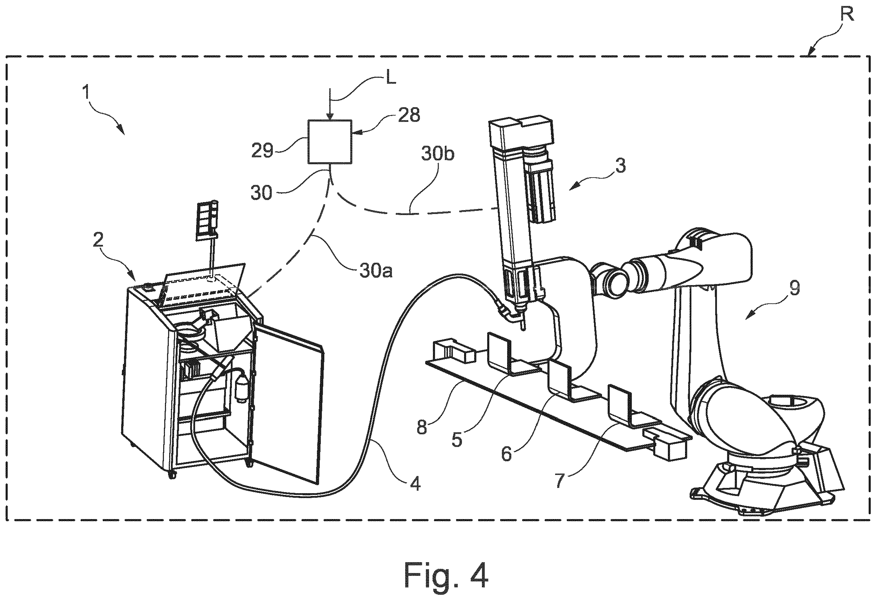

Fig. 4 ein alternatives System,

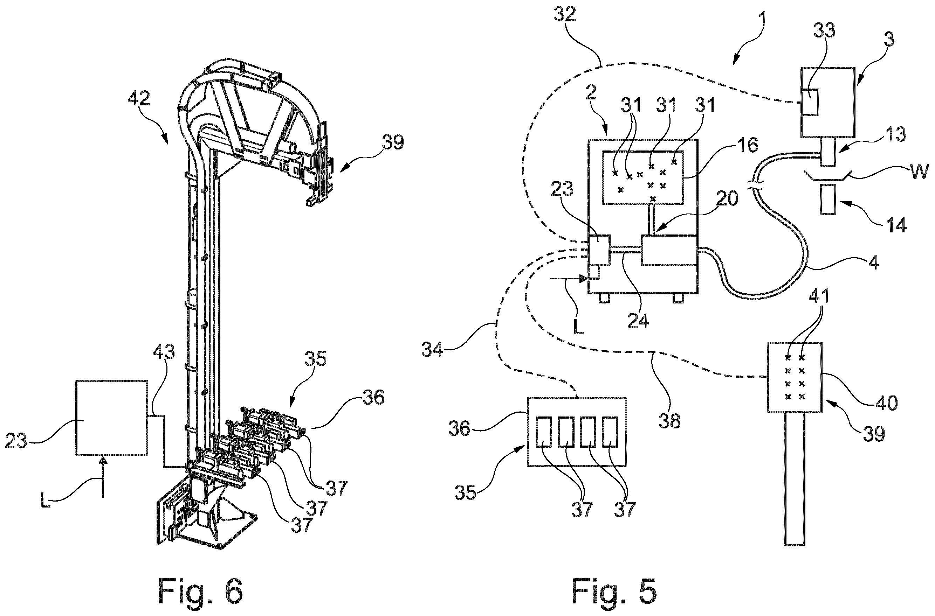

Fig. 5 ein anderes alternatives System stark schematisiert,
Fig. 6 ein weiteres System teilweise schematisch dargestellt und

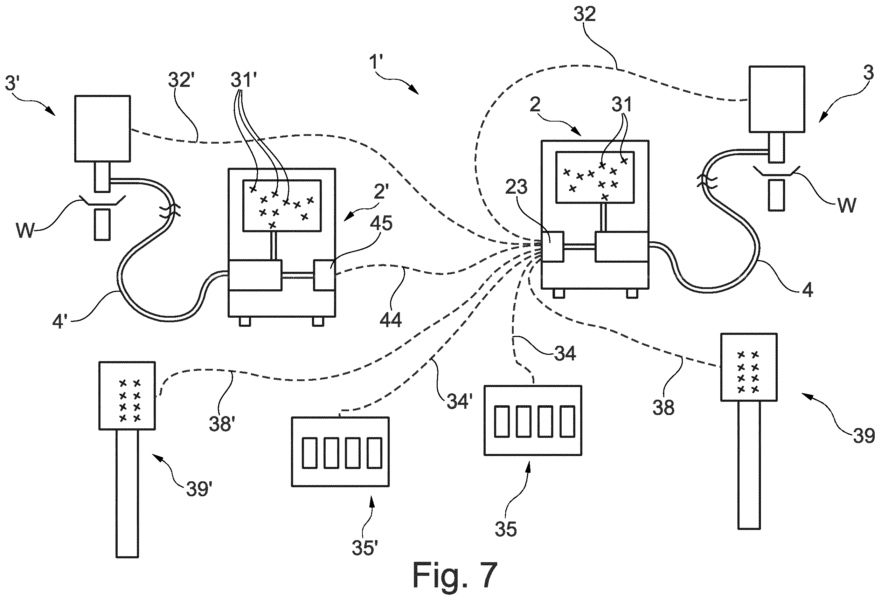

Fig. 7 ein weiteres schematisch dargestelltes System.

Die in Figuren 1 - 7 dargestellten Systeme/Anordnungen fallen nicht unter die vorliegende Erfindung, da jeweils nur genau eine Gasverdichter-Einheit vorhanden ist.

Für sich entsprechende Elemente unterschiedlicher Ausführungsbeispiele sind nachfolgend teils die gleichen Bezugszeichen verwendet.

Fig. 1 zeigt ein System 1 zur Verarbeitung von Elementen (nicht dargestellt in den Fig. 1-3) in perspektivischer Ansicht. Das System 1 umfasst eine Zuführvorrichtung 2, ein Verarbeitungsgerät 3 und eine hohle Transportleitung 4. Die Transportleitung 4 ist zum Beispiel als hohler flexibler Zuführschlauch ausgestaltet. Die Transportleitung 4 ist mit einem Ende 4b am Verarbeitungsgerät 3 über einen Leitungsanschluss 3a des Verarbeitungsgeräts 3 mit diesem verbunden bzw. daran angeschlossen. Das Verarbeitungsgerät 3 ist zur Verarbeitung der Elemente ausgebildet. Die Zuführvorrichtung 2 dient zur Aufnahme einer Mehrzahl von Elementen, und um die Elemente an die Transportleitung 4 zu übergeben.

Das System 1 dient zum Einwirken auf bzw. zur Bearbeitung von an einer Bearbeitungsstation 11 fest vorhandenen Werkstücken 5, 6, 7 und 8. Das Einwirken auf die Werkstücke 5-8 zum Anbringen eines Elements an einer Fügestelle erfolgt mit dem Verarbeitungsgerät 3 zur Verarbeitung der Elemente bzw. zum Beispiel zum Setzen eines Elements an der Fügestelle an dem jeweiligen Werkstück 5-8. Beispielsweise werden die winkelförmigen Werkstücke 5-7 jeweils vernietet mit dem als ebene Blechlage ausgebildeten Werkstück 8. Die Werkstücke 5-7 sind auf einer Oberseite des Werkstücks 8 regelmäßig beabstandet zueinander positioniert. Das Verarbeitungsgerät 3 ist gemäß Fig. 1 im Bereich des Werkstücks 5 vorhanden.

Das Verarbeitungsgerät 3 ist mit einem Roboter 9 verbunden bzw. an einem bewegbaren Roboterarm 10 des Roboters 9 aufgenommen. Der Roboter 9 dient zur Bedienung und räumlichen Bewegung des Verarbeitungsgeräts 3, um zum Beispiel die Elemente an den Werkstücken 5-8 anzubringen.

Das beispielsweise als Niet-Verarbeitungsgerät ausgebildete Verarbeitungsgerät 3 weist beispielsweise einen hydropneumatischen bzw. einen pneumohydraulischen Antrieb 15 und einen C-Bügel 12 mit zwei Schenkeln auf. An einem Schenkel des C-Bügels 12 ist eine Stempeleinheit 13 und an dem anderen Schenkel eine Matrizeneinheit 14 des Verarbeitungsgeräts 3 aufgenommen (s. Fig. 2).

Das System 1 samt dem Roboter 9 und der Bearbeitungsstation 11 mit den Werkstücken 5-8 sind in einem Aufstellungsraum R positioniert. Der Aufstellungsraum R, der zum Beispiel einen Teil einer Produktionshalle einnimmt, ist in Fig. 1 schematisiert gestrichelt umrandet angedeutet.

Fig. 2 zeigt ohne die Werkstücke 5-8 das System 1 ohne Roboter.

Die Zuführvorrichtung 2 und das Verarbeitungsgerät 3 sind über die hohle Transportleitung 4 miteinander verbunden. Die Elemente werden durch eine Gas-Strömung innerhalb der insbesondere gasdichten Transportleitung 4 in Transportrichtung T von der Zuführvorrichtung 2 zum Verarbeitungsgerät 3 transportiert. Die am Verarbeitungsgerät 3 ankommenden Elemente werden in entsprechenden Leitungsabschnitten des Verarbeitungsgeräts 3 weitergeleitet und über die Stempeleinheit 13 an der jeweiligen Fügestelle der Werkstücke 5-8 gesetzt. Mit dem Verarbeitungsgerät 3 werden zum Beispiel Niete wie Stanzniete, Clinchniete oder Funktionselemente an den Werkstücken 5-8 gesetzt.

Die Zuführvorrichtung 2 ist als zum Verarbeitungsgerät 3 separates Peripherie-Einheit ausgestaltet, zum Beispiel mit unterseitigen Rollen 2a zur fahrbaren Bewegung des Verarbeitungsgeräts 3 auf einem festen Untergrund.

Die Zuführvorrichtung 2 weist einen Vorratsbehälter 16 mit einem Aufnahmevolumen 16a zur Vorlage bzw. zur Aufnahme einer Mehrzahl von Elementen (nicht dargestellt) auf. Der Vorratsbehälter 16 ist über ein hohles leitungsartiges Zwischenstück 17 zum einzelnen Durchlass der Elemente mit einem Sortiertopf 18 verbunden. Im Sortiertopf 18 werden die vom Zwischenstück 17 ankommenden Elemente einzeln lagerichtig positioniert und in eine an den Sortiertopf 18 anschließende Pufferleitung 19 überführt. In der Pufferleitung 19 sind die Elemente in der jeweils gleichen Orientierung in einer Reihe hintereinander vorgelegt. Aus der Pufferleitung 19 gelangen die Elemente weiter nach unten zu einer Vereinzelungseinrichtung 20 für die Elemente.

Von der Vereinzelungseinrichtung 20 gelangen die Elemente einzeln in einen hohlen Leitungsabschnitt 21 der Zuführvorrichtung 2. Durch den Leitungsabschnitt 21 gelangen die Elemente zu einer Anschluss-Stelle 22 der Zuführvorrichtung 2.

An der Anschluss-Stelle 22 sind die Elemente aus der Zuführvorrichtung 2 ausschleusbar. An der Anschluss-Stelle 22 ist der Leitungsabschnitt 21 z. B. gasdicht verbunden mit einem Ende 4a der Transportleitung 4. Im gezeigten Ausführungsbeispiel sind der Leitungsabschnitt 21 und die Transportleitung 4 einstückig miteinander ausgebildet bzw. einstückig miteinander verbunden. Die Leitungsabschnitt 21 und die Transportleitung 4 sind beispielhaft durch ein zusammenhängendes Stück als Zuführschlauch gebildet.

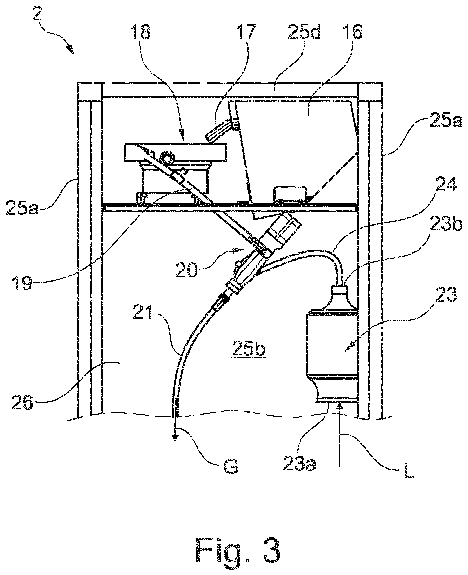

Die Elemente sind mit Hilfe bzw. mittels einer Gas-Strömung G im Leitungsabschnitt 21 und in der Transportleitung 4 von der Anschluss-Stelle 22 bis zum von der Zuführvorrichtung 2 beabstandeten Verarbeitungsgerät 3 transportierbar. Die Elemente werden beispielsweise einzeln im Bereich der Vereinzelungseinrichtung 20 von der im Leitungsabschnitt 21 (s. Fig. 3) herrschenden Gas-Strömung G mitgenommen und in Richtung der Anschluss-Stelle 22 transportiert. Die Gas-Strömung setzt sich in der Transportleitung 4 fort, so dass die Elemente vom Leitungsabschnitt 21 in die Transportleitung 4 bewegt werden. Aufgrund der Gas-Strömung G in der Transportleitung erfolgt der reibungsarme Transport der Elemente in der Transportleitung 4 bis zu einem Ende 4b der Transportleitung 4. Das Ende 4b der Transportleitung 4 reicht bis zum Leitungsanschluss 3a am Verarbeitungsgerät 3 zum Beispiel im Bereich der Stempeleinheit 13. Das Ende 4b der Transportleitung 4 ist mit dem Leitungsanschluss 3a an der Stempeleinheit 13 verbunden, durch welche die Elemente einzeln und positionsrichtig in einen Stempelkanal der Stempeleinheit 13 gelangen, zum Beispiel mit Hilfe der Gas-Strömung G eingeblasen werden.

Das System 1 weist eine pneumatisch betriebene Systemkomponente auf. Die pneumatisch betriebene Systemkomponente dient hier beispielsweise zum Betrieb der Zuführvorrichtung **z. B.** ist ein Teil der Zuführvorrichtung 2.

Das System 1 umfasst eine Gasverdichter-Einheit 23 zur Erzeugung und zur Bereitstellung von verdichteter und/oder beschleunigter Druckluft. Beispielsweise ist Gasverdichter-Einheit 23 als Gasstrom-Erzeugungseinrichtung ausgebildet, um die die Gas-Strömung G bereitzustellen. Die Zuführvorrichtung 2 weist zur Bereitstellung der Gas-Strömung G in dem Leitungsabschnitt 21 und weiter in der Transportleitung 4 die Gasverdichter-Einheit 23 auf. Die Gasverdichter-Einheit 23 ist zum Beispiel ausschließlich für die Zuführvorrichtung 2 vorgesehen, zur Förderung der Elemente mittels der Gas-Strömung G. Über eine zur Umgebung bzw. Atmosphäre offene Saugseite 23a der Gasverdichter-Einheit 23 wird atmosphärische Luft L aus der Umgebung angesaugt und in der Gasverdichter-Einheit 23 verdichtet und/oder beschleunigt. Die Gasverdichter-Einheit 23 ist z. B. elektrisch betreibbar mit einem integrierten Antriebs- bzw. Elektro-Motor. Eine Druckseite 23b der Gasverdichter-Einheit 23 ist zum Beispiel über eine druckluftführende Verbindungsleitung 24 mit der Vereinzelungseinrichtung 20 verbunden. Dabei gelangt die Druckluft-Gas-Strömung in den Bereich des Leitungsabschnitts 21, der an die Vereinzelungseinrichtung 20 angeschlossen ist. Die Gas-Strömung bewirkt eine Ansaug- bzw. Mitnahmekraft auf ein vereinzeltes Element an einer Abführseite der Vereinzelungseinrichtung 20. Die ankommende Druckluft strömt dabei in den Leitungsabschnitt 21 über und nimmt z. B. ein einzelnes in der Vereinzelungseinrichtung 20 vorderstes bzw. vereinzeltes Element mit und weiter in den Leitungsabschnitt 21. Die Vereinzelungseinrichtung 20 vereinzelt das zur Vereinzelungseinrichtung 20 hin betrachtet vorderste Element aus einer Reihe von Elementen, die in der Pufferleitung 19 an der Vereinzelungseinrichtung 20 ansteht.

Mit der Gas-Strömung sind bei aktiver Gasverdichter-Einheit 23 die von der Vereinzelungseinrichtung nacheinander vereinzelten Elemente durch den Leitungsabschnitt 21 an die Anschluss-Stelle 22 bewegbar.

Im verbundenen Zustand von Leitungsabschnitt 21 und Transportleitung 4 sind die Elemente von der Anschluss-Stelle 22 mit der Gas-Strömung aus dem Leitungsabschnitt 21 heraus und weiter transportierbar in der Transportleitung 4 bis zum Verarbeitungsgerät 3.

Die Gasverdichter-Einheit 23 ist ausgebildet, Luft L aus der Umgebung der Zuführvorrichtung 2 auf der Saugseite 23a der Gasverdichter-Einheit 23 anzusaugen, um die Gas-Strömung bereitzustellen.

Die Gasverdichter-Einheit 23 ist ausgebildet, Luft mit atmosphärischem Druck aus der Umgebung der Zuführvorrichtung 2, also Anteile der Luft im Aufstellungsraum R der Zuführvorrichtung 2, auf der Saugseite 23a der Gasverdichter-Einheit 23 anzusaugen, um die Gas-Strömung bereitzustellen. Die Saugseite 23a ist zum Beispiel innerhalb eines Gehäuses 25 der Zuführvorrichtung 2 bzw. in einem vom Gehäuse 25 umgebenen Innenraum 26 der Zuführvorrichtung 2 vorhanden, wobei der Innenraum 26 offen ist zur Umgebung bzw. mit dem Luftraum im Aufstellungsraum R verbunden ist. Die Saugseite 23a ist alternativ oder zusätzlich zum Beispiel außerhalb des Gehäuses 25 der Zuführvorrichtung 2 offen zum Luftraum im Aufstellungsraum R. Die Gasverdichter-Einheit 23 weist zum Beispiel einen Luftstromerzeuger auf.

Das kastenartige Gehäuse 25 weist Seitenwände 25a, eine Rückwand 25b, einen Boden 25c, eine Oberseite 25d und eine schwenkbare Türe 25e auf. Die Oberseite 25d ist mittels einer geöffneten schwenkbaren Klappe offen zur Umgebung, was Fig. 1 und 2 zeigen, so dass im Betrieb der Gasverdichter-Einheit 23 immer ausreichend Umgebungsluft zur Saugseite 23a der Gasverdichter-Einheit 23 gelangt. Eine z. B. Elektroverkabelung zur Versorgung der Zuführvorrichtung 2 mit elektrischer Energie ist nicht dargestellt. Die Zuführvorrichtung 2 weist zum Beispiel keine Versorgungsschnittstelle für eine dezentrale Druckluftversorgung der Zuführvorrichtung 2 auf. Die Zuführvorrichtung 2 weist dementsprechend z.B. keinen Druckluftanschluss- bzw. keinen Drucklufteingang für eine Zuführung von zum System 1 extern bzw. zentral bereitgestellter Druckluft auf.

Die Gasverdichter-Einheit 23 umfasst zum Beispiel eine Gaskompressionseinheit zur saugseitig in dem Leitungsabschnitt 21 erzeugten Gas-Strömung. Die Gas-Strömung ist durch verdichtete und/oder beschleunigte Luft mit der Gasverdichter-Einheit 23 bereitstellbar, was auf unterschiedliche Weise möglich ist. Die Gasverdichter-Einheit 23 weist beispielsweise eine Druckluftkompressionseinheit aufweisen. Die Gasverdichter-Einheit 23 arbeitet zum Beispiel nach dem Turboverdichterprinzip mit Radialverdichter und/oder Axialverdichter, zum Beispiel mit einem mehrstufigen Radialverdichter und/oder mit einem mehrstufigen Axialverdichter.

Eine nicht näher dargestellte übergeordnete Kontrolleinheit 27 der Zuführvorrichtung 2 weist eine Rechnersteuerung bzw. Software und eine Rechner- und Speichereinheit auf und dient zur Kontrolle des Betriebs der Zuführvorrichtung 2. Die Kontrolleinheit 27 dient insbesondere zur Kontrolle einer vorgebbaren bzw. anpassbaren und/oder einstellbaren Leistungsstufe der Gasverdichter-Einheit 23. Mit der Kontrolleinheit 27 sind beispielsweise die Druckluftkompression, die Drucklufterzeugung und die damit bereitstellbare Luftleistung vorgebbar und/oder variierbar. Die bereitstellbare Luftleistung ist mit der Kontrolleinheit 27 insbesondere auf einen realen z. B. jeweils momentan erforderlichen Luft-Bedarf anpassbar, zum Beispiel dynamisch anpassbar. Der reale Luft-Bedarf ist insbesondere programmierbar und/oder z. B. auf Basis der mit Sensormitteln (nicht gezeigt) erfassten Sensorwerte an den realen Bedarf zum Beispiel dynamisch anpassbar. Erfasste Sensorwerte betreffen zum Beispiel eine Geschwindigkeit der geförderten Elemente in dem Leitungsabschnitt 21 und/oder der Transportleitung 4. Mit der Kontrolleinheit 27 ist zum Beispiel auf Basis der sensorisch erfassten Geschwindigkeit der geförderten Elemente in dem Leitungsabschnitt 21 und/oder der Transportleitung 4 eine Anpassung der Geschwindigkeit der geförderten Elemente auf einen in einer Software hinterlegten Ziel- bzw. Sollwert möglich.

Die Sensormittel der Zuführvorrichtung 2 sind zur Erfassung und Bereitstellung der Sensorwerte zum Beispiel zur Bereitstellung von Sensorwerten für die Weiterverarbeitung durch die Kontrolleinheit 27 vorgesehen.

Eine nicht dargestellte Alternative des Systems 1 zeichnet sich dadurch aus, dass eine Zuführvorrichtung mit den Komponenten gemäß der Zuführvorrichtung 2 zum Beispiel jedoch ohne ein Gehäuse 25 an dem Verarbeitungsgerät 3 zum Beispiel unmittelbar vorhanden ist. Eine Zuführvorrichtung mit den Funktionen bzw. mit den Komponenten gemäß der Zuführvorrichtung 2 ist alternativ beispielsweise an dem Roboter 9 vorhanden. Am Roboter 9 sind zum Beispiel eine Magazinierung der Elemente mit dem Vorratsbehälter und/oder zusätzlich ein Sortiertopf und/oder eine Pufferleitung vorhanden. Für ein als Technologiesystem ausgebildetes System sind z. B. genau eine Zuführvorrichtung, oder genau zwei oder mehr als zwei Zuführvorrichtungen vorgesehen. Beispielsweise ist es auch möglich, dass bei einem alternativen System zumindest eine Komponente gemäß der Zuführvorrichtung 2 an dem Verarbeitungsgerät 3 und zumindest eine andere Komponente gemäß der Zuführvorrichtung 2 an dem Roboter 9 vorhanden ist.

Bei einem alternativen System bzw. Technologie-System ist es zum Beispiel eingerichtet, dass die Förderung der Elemente am Verarbeitungsgerät 3 und/oder am Roboter 9 vorgesehen ist, um die Elemente von einem Fördergerät zu einer Befüllstation des Verarbeitungsgeräts zu fördern.

Bei einem alternativen System bzw. Technologie-System ist es zum Beispiel eingerichtet, die Elemente von einem auf dem Verarbeitungsgerät vorgesehenen Magazin zur Vorlage einer Vielzahl von Elementen zu einer Verarbeitungsstelle des Verarbeitungsgeräts zu fördern. Die Verarbeitungsstelle des Verarbeitungsgeräts umfasst zum Beispiel einen Setzkopf des Verarbeitungsgeräts umfassend die Stempeleinheit und die Matrizeneinheit.

Bei einem mehrbahnigen Gesamt-System mit z. B. parallel arbeitenden Systemen gemäß dem System 1 ist es beispielsweise einrichtbar, dass die jeweilige Bahn gemäß dem oben beschriebenen System 1 konzipiert ist.

Eine weitere Alternative eines Systems zeichnet sich dadurch aus, dass ein normaler bzw. zum Beispiel handelsüblicher bekannter Kompressor in der Zuführvorrichtung 2 und/oder am Verarbeitungsgerät 3 und/oder am Roboter 9 vorhanden ist. Der Kompressor arbeitet zum Beispiel nach dem Verdrängerprinzip und ist beispielsweise als Kolben- oder Schraubenverdichter realisiert.

Fig. 4 unterscheidet sich von dem System 1 gemäß Fig. 1 dadurch, dass die Zuführvorrichtung 2 keine integral vorhandene Gasverdichter-Einheit aufweist. Das System 1 weist vielmehr eine als separate Teileinheit 28 vorhandene Gasverdichter-Einheit 29 auf, die stark schematisiert angedeutet ist. Saugseitig der Gasverdichter-Einheit 29 saugt im Betrieb der Gasverdichter-Einheit 29 diese Luft L aus dem Aufstellungsraum R an und stellt druckseitig verdichtete und/oder beschleunigte Druckluft bereit. Die Druckluft verlässt die Gasverdichter-Einheit 29 druckseitig der Gasverdichter-Einheit 29 beispielsweise in Form einer Gas-Strömung. Aus der Gasverdichter-Einheit 29 strömt die Druckluft in eine druckseitig an der Gasverdichter-Einheit 29 angeschlossene gasdichte Abströmleitung 30. Die Abströmleitung 30 teilt sich auf bzw. mündet in einen Leitungsabschnitt 30a und in einen Leitungsabschnitt 30b.

Über nicht dargestellte z. B. Ventile in der Abströmleitung 30 und/oder in dem Leitungsabschnitt 30a und/oder in dem Leitungsabschnitt 30b strömt die Druckluft in der Abströmleitung 30 in den Leitungsabschnitt 30a und/oder in den Leitungsabschnitt 30b.

Über den mit der Zuführvorrichtung 2 verbundenen Leitungsabschnitt 30a ist eine pneumatisch betriebene nicht bezeichnete Systemkomponente der Zuführvorrichtung 2 mit Druckluft versorgbar.

Über den mit dem Verarbeitungsgerät 3 verbundenen Leitungsabschnitt 30b ist eine pneumatisch betriebene nicht bezeichnete Systemkomponente des Verarbeitungsgeräts 3 mit Druckluft versorgbar.

Fig. 5 zeigt ein alternatives System 1 mit dezentraler Druckluftversorgung stark schematisiert. Das System 1 umfasst eine Zuführvorrichtung 2, ein Verarbeitungsgerät 3 und eine Transportleitung **4.** An dem Verarbeitungsgerät 3 ist zwischen einer Stempeleinheit 13 und einer Matrizeneinheit 14 ein Werkstück W vorhanden, wie **z. B.** ein Blech-Werkstück, an welchem ein Element 31 einpressbar ist, was stark schematisch dargestellt ist.

Die Zuführvorrichtung 2 umfasst genau eine Gasverdichter-Einheit 23, zum Beispiel genau einen Kompressor. Die Gasverdichter-Einheit 23 ist zum Beispiel elektrisch betreibbar bzw. umfasst einen Elektromotor. Mit der Gasverdichter-Einheit 23 ist saugseitig zur Gasverdichter-Einheit 23 Luft L aus der Umgebung der Zuführvorrichtung 2 ansaugbar. Druckseitig wird im Betrieb der Gasverdichter-Einheit 23 Druckluft zum Beispiel mit einem Druck von 3 bis 6 bar für eine pneumatische Bedienung von Systemkomponenten bereitgestellt.

Über eine Vereinzelungseinrichtung 20 werden Elemente 31, die in einem Vorratsbehälter 16 der Zuführvorrichtung 2 in einer Mehrzahl vorgelegt sind, vereinzelt. Über die von der Gasverdichter-Einheit 23 über eine Verbindungsleitung 24 mit Druckluft versorgte hohle Transportleitung 4 werden aus der Vereinzelungseinrichtung 20 jeweils einzelne Elemente nacheinander dem Verarbeitungsgerät 3 pneumatisch gefördert zugeführt.

Mit von der Gasverdichter-Einheit 23 bereitgestellten Druckluft wird außerdem über eine hohle Druckluftleitung 32, die druckseitig zwischen der Gasverdichter-Einheit 23 und dem Verarbeitungsgerät 3 ausgebildet ist, eine Systemkomponente 33 des Verarbeitungsgeräts 3 mit Druckluft versorgt. Die Systemkomponente 33 ist pneumatisch betreibbar. Beispielsweise ist die Systemkomponente 33 ein Bewegungsantrieb zum pneumatischen oder pneumohydraulischen Antrieb eines linear bewegbaren Stempels des Verarbeitungsgeräts 3 oder z. B. ein Verriegelungsorgan zum mechanischen Blockieren eines bewegbaren Bauteils. Die Systemkomponente 33 wird über die hohle nach außen gasdichte Druckluftleitung 32 mit Druckluft versorgt.

Mit von der Gasverdichter-Einheit 23 bereitgestellten Druckluft wird über eine weitere hohle Druckluftleitung 34, die druckseitig zwischen der Gasverdichter-Einheit 23 und einer Systemkomponente 35 des Verarbeitungsgeräts 3 vorhanden ist, die Systemkomponente 35 mit Druckluft versorgt. Die Systemkomponente 35 umfasst eine Werkzeug-Wechselstation 36 mit zum Beispiel vier an der Werkzeug-Wechselstation 36 lösbar und positionsrichtig angeordneten Werkzeugen 37. Die Werkzeuge 37 lassen sich jeweils einzeln gegen ein Werkzeug am Verarbeitungsgerät 3 austauschen, z. B. gegen ein Werkzeug einer Stempeleinheit des Verarbeitungsgeräts 3, was pneumatisch mit der über die Druckluftleitung 34 bereitgestellten Druckluft erfolgt.

Mit von der Gasverdichter-Einheit 23 bereitgestellten Druckluft wird über eine weitere hohle Druckluftleitung 38, die druckseitig zwischen der Gasverdichter-Einheit 23 und einer Systemkomponente 39 des Verarbeitungsgeräts 3 vorhanden ist, die Systemkomponente 39 mit Druckluft versorgt. Die Systemkomponente 39 umfasst einen Vorratsbehälter 40, in dem eine Mehrzahl von Elementen 41 wie z.B. Nieten oder Funktionselemente vorgelegt sind. Zum Beispiel ist der Vorratsbehälter 40 als Magazin bzw. als Element-Magazin ausgebildet, in dessen Innenvolumen die Elemente 41 aufgenommen und von außen einfüllbar sind. Die Elemente 41 lassen sich pneumatisch in ein in Fig. 5 nicht dargestelltes Magazin zur Aufnahme von mehreren Elementen 41 am Verarbeitungsgerät 3 austauschen, was pneumatisch mit der über die Druckluftleitung 38 bereitgestellten Druckluft erfolgt. Beispielsweise zur Befüllung des Magazins zur Aufnahme von Elementen 41 fährt das Verarbeitungsgerät 3, beispielsweise durch einen Roboter, an dem das Verarbeitungsgerät 3 aufgenommen und räumlich bewegbar ist, an den mit Elementen 41 befüllten Vorratsbehälter 40 heran. Dann erfolgt die pneumatische Überführung der Elemente 41 und anschließend bewegt sich das Verarbeitungsgerät 3 wieder weg vom der Systemkomponente 39.

Fig. 6 zeigt eine Anordnung mit genau einer Gasverdichter-Einheit 23 zur dezentralen Bereitstellung von Druckluft für eine Systemkomponente 35 und für eine weitere Systemkomponente 39. Die Gasverdichter-Einheit 23 gemäß Fig. 6 ist beispielsweise ein Kompressor. Die Systemkomponenten 35 und 39 sind an einem gemeinsamen Galgen 42 aufgenommen. Die Gasverdichter-Einheit 23 saugt Luft L aus der Umgebung der Gasverdichter-Einheit 23 an und verdichtet diese auf zum Beispiel 3 bis 6 bar. Über eine Druckluftleitung 43 wird die Druckluft zum Galgen 42 und weiter zur Systemkomponente 35 und/oder zur Systemkomponente 39 gefördert.

Die Gasverdichter-Einheit 23 kann als separate Einheit in der Umgebung des Verarbeitungsgeräts aufgestellt sein oder Teil einer Zuführvorrichtung 2 sein.

Schließlich zeigt Fig. 7 ein alternatives System 1' mit dezentraler Druckluftversorgung stark schematisiert. Das System 1' gemäß Fig. 7 umfasst genau eine Gasverdichter-Einheit 23. Ansonsten umfasst das System 1' zweimal die Komponenten des Systems 1 gemäß Fig. 5.

Das System 1' umfasst eine erste Zuführvorrichtung 2, eine zweite Zuführvorrichtung **2',** ein erstes Verarbeitungsgerät 3 mit einem Werkstück W und ein zweites Verarbeitungsgerät 3' mit einem Werkstück W. Zwischen der ersten Zuführvorrichtung 2 und dem ersten Verarbeitungsgerät 3 ist eine erste Transportleitung 4 vorhanden.

Zwischen der zweiten Zuführvorrichtung 2' und dem zweiten Verarbeitungsgerät 3' ist eine zweite Transportleitung 4' vorhanden.

Das System 1' umfasst genau eine Gasverdichter-Einheit 23. Zum Beispiel ist die genau eine Gasverdichter-Einheit 23 Teil der Zuführvorrichtung 2, zum Beispiel ist die Gasverdichter-Einheit 23 ein Kompressor. Die Gasverdichter-Einheit 23 saugt Luft L aus der Umgebung der Zuführvorrichtung 2 an und versorgt mehrere zum Beispiel sämtliche pneumatische Systemkomponenten des Systems 1'.

Druckseitig wird im Betrieb der Gasverdichter-Einheit 23 Druckluft zum Beispiel mit einem Druck von 3 bis 6 bar für eine pneumatische Bedienung von pneumatisch betreibbaren Systemkomponenten 35, 39, 35' und 39' bereitgestellt. Beispielsweise sind die Systemkomponenten 35 und 39 Systemkomponenten des Verarbeitungsgeräts 3. Beispielsweise sind die Systemkomponenten 35' und 39' Systemkomponenten des Verarbeitungsgeräts 3'. Die Gasverdichter-Einheit 23 stellt außerdem Druckluft zum Transport von Elementen 31 von der Zuführvorrichtung 2 zum Verarbeitungsgerät 3 bereit. Die Gasverdichter-Einheit 23 stellt außerdem Druckluft zum Transport von Elementen 31' von der Zuführvorrichtung 2' zum Verarbeitungsgerät 3' bereit.

Hierfür sind Druckluftleitungen 32, 34, 38, 32', 34'und 38' vorgesehen.

Über eine Druckluftleitung 44 ist die Gasverdichter-Einheit 23 mit einem Druckluft-Speicher 45 der Zuführvorrichtung 2' verbunden. Damit wird von der Gasverdichter-Einheit 23 bereitgestellte Druckluft in den Druckluft-Speicher 45 gefördert und dort bereitgestellt, um die vereinzelten Elemente 31' über die Transportleitung 4' dem Verarbeitungsgerät 3' zuzuführen.

Alternativ kann beispielsweise der Druckluft-Speicher 45 der Zuführvorrichtung 2' auch entfallen. Beispielsweise kann der Druckluft-Speicher 45 nicht als Teil der Zuführvorrichtung 2' vorhanden sein, sondern an einer anderen Stelle im System 1' vorhanden sein.

Beispielsweise kann zusätzlich zur Gasverdichter-Einheit 23 zum Beispiel genau eine weitere Gasverdichter-Einheit oder weitere mehrere Gasverdichter-Einheiten vorgesehen sein, zum Beispiel als Teil der Zuführvorrichtung 2' und/oder als separate Gasverdichter-Einheit 23 außerhalb der Zuführvorrichtung 2 und/oder 2' oder außerhalb der Verarbeitungsgeräte 3, 3' und/oder als Teil zumindest eines der Verarbeitungsgeräte 3, 3'.

### Bezugszeichenliste

- 1, 1': System
- 2, 2': Zuführvorrichtung
- 2a: Rolle
- 3, 3': Verarbeitungsgerät
- 3a: Leitungsanschluss
- 4, 4': Transportleitung
- 4a, 4b: Ende
- 5-8: Werkstück
- 9: Roboter
- 10: Roboterarm
- 11: Bearbeitungsstation
- 12: C-Bügel
- 13: Stempeleinheit
- 14: Matrizeneinheit
- 15: Antrieb
- 16: Vorratsbehälter
- 16a: Aufnahmevolumen
- 17: Zwischenstück
- 18: Sortiertopf
- 19: Pufferleitung
- 20: Vereinzelungseinrichtung
- 21: Leitungsabschnitt
- 22: Anschluss-Stelle
- 23: Gasverdichter-Einheit
- 23a: Saugseite
- 23b: Druckseite
- 24: Verbindungsleitung
- 25: Gehäuse
- 25a: Seitenwand
- 25b: Rückwand
- 25c: Boden
- 25d: Oberseite
- 25e: Türe
- 26: Innenraum
- 27: Kontrolleinheit
- 28: Teileinheit
- 29: Gasverdichter-Einheit
- 30: Abströmleitung
- 30a, 30b: Leitungsabschnitt
- 31, 31': Element
- 32, 32': Druckluftleitung
- 33: Systemkomponente
- 34, 34': Druckluftleitung
- 35, 35': Systemkomponente
- 36: Werkzeug-Wechselstation
- 37: Werkzeug
- 38, 38': Druckluftleitung
- 39, 39': Systemkomponente
- 40: Vorratsbehälter
- 41: Element
- 42: Galgen
- 43: Druckluftleitung
- 44: Druckluftleitung
- 45: Druckluft-Speicher

## Patentansprüche

1. System (1, 1') zur Verarbeitung von Elementen, wobei die Elemente Verbindungselemente, Fügeelemente wie Schrauben und Nieten, Stanznieten, Clinch-Nieten und/oder Funktionselemente wie Stanz-, Einstanz-, Einpress-, Einpräge-Muttern und/oder Stanz-, Einstanz-, Einpress-, Einpräge-Bolzen sind, umfassend eine Zuführvorrichtung (2), ein Verarbeitungsgerät (3) und eine hohle Transportleitung (4), wobei die Zuführvorrichtung (2) und das Verarbeitungsgerät (3) über die hohle Transportleitung (4) miteinander verbunden sind, wobei das Verarbeitungsgerät (3) zur Verarbeitung von Elementen ausgebildet ist, wobei die Zuführvorrichtung (2) ausgebildet ist, eine Mehrzahl von Elementen aufzunehmen und an die hohle Transportleitung (4) zu übergeben, wobei die Elemente über die hohle Transportleitung (4) zum Verarbeitungsgerät (3) transportierbar sind, um das Verarbeitungsgerät (3) mit den Elementen zu versorgen, wobei eine pneumatisch betreibbare Systemkomponente zum Betrieb des Systems (1, 1') vorhanden ist, wobei das System (1) eine Gasverdichter-Einheit (23) zur Erzeugung und zur Bereitstellung von verdichteter und/oder beschleunigter Druckluft umfasst, wobei die Gasverdichter-Einheit (23) in einem Aufstellungsraum vorhanden ist, in welchem das System (1) untergebracht ist, wobei die Gasverdichter-Einheit (23) ausgebildet ist, Luft aus der Umgebung des Verarbeitungsgeräts (3) und/oder aus der Umgebung der Zuführvorrichtung (2) im Aufstellungsraum anzusaugen und verdichtete und/oder beschleunigte Druckluft für die pneumatisch betreibbare Systemkomponente zum Betrieb der Zuführvorrichtung (2) und zum Betrieb des Verarbeitungsgeräts (3) bereitzustellen, **dadurch gekennzeichnet, dass** mehrere Gasverdichter-Einheiten vorhanden sind, wobei zwei Gasverdichter-Einheiten vorhanden sind, wobei sich die zwei Gasverdichter-Einheiten in der Konstruktion und/oder in dem Funktionsprinzip voneinander unterscheiden.

2. System zum Durchsetzfügen eines Materials, umfassend ein Durchsetzfügegerät wobei das Durchsetzfügegerät zum Durchsetzfügen ausgebildet ist, wobei das System (1) in einem Aufstellungsraum vorhanden ist, wobei eine pneumatisch betreibbare Systemkomponente zum Betrieb des Durchsetzfügegeräts vorhanden ist, wobei das System (1) eine Gasverdichter-Einheit zur Erzeugung und zur Bereitstellung eines verdichteten und/oder beschleunigten Gas-Volumens umfasst, wobei die Gasverdichter-Einheit im Aufstellungsraum vorhanden ist, wobei die Gasverdichter-Einheit ausgebildet ist, Luft aus der Umgebung des Durchsetzfügegeräts im Aufstellungsraum anzusaugen und verdichtete und/oder beschleunigte Druckluft für die pneumatisch betreibbare Systemkomponente zum Betrieb des Durchsetzfügegeräts bereitzustellen, **dadurch gekennzeichnet, dass** mehrere Gasverdichter-Einheiten vorhanden sind, wobei zwei Gasverdichter-Einheiten vorhanden sind, wobei sich die zwei Gasverdichter-Einheiten in der Konstruktion und/oder in dem Funktionsprinzip voneinander unterscheiden.

3. System (1) nach Anspruch 1, **dadurch gekennzeichnet, dass** die pneumatisch betreibbare Systemkomponente zum Betrieb des Verarbeitungsgeräts (3) eine Element-Befüllstation und/oder eine Werkzeug-Wechselstation umfasst.

4. System (1) nach einem der vorhergehenden Ansprüche, **dadurch gekennzeichnet, dass** eine Gasverdichter-Einheit (23) ausgebildet ist, Druckluft mit unterschiedlichen Druckniveaus bereitzustellen.

5. System (1) nach einem der vorhergehenden Ansprüche, **dadurch gekennzeichnet, dass** eine Gasverdichter-Einheit (23) vorhanden ist, die nach dem dynamischen Verdichterprinzip arbeitet, und dass eine Gasverdichter-Einheit vorhanden ist, die nach dem Verdrängerprinzip arbeitet.

6. System (1) nach einem der vorhergehenden Ansprüche, **dadurch gekennzeichnet, dass** die Gasverdichter-Einheit (23) zur Bereitstellung eines Druckniveaus ausgebildet ist, das unter einem Druckniveau liegt, das 0,3 bar über einem Ausgangsdruck liegt, oder das unter einem Druckniveau liegt, das 0,2 bar über einem Ausgangsdruck liegt, oder das unter einem Druckniveau liegt, das 0,1 bar über einem Ausgangsdruck liegt, wobei die Gasverdichter-Einheit nach dem Verdrängerprinzip arbeitet.

7. System (1) nach einem der vorhergehenden Ansprüche, **dadurch gekennzeichnet, dass** die Gasverdichter-Einheit angepasst ist, eine der Gasverdichter-Einheit nachgeordnet vorhandene Systemkomponente mit einem im System höchsten Druckniveau zu versorgen.

8. System (1) nach einem der vorhergehenden Ansprüche, **dadurch gekennzeichnet, dass** die Gasverdichter-Einheit angepasst ist, eine der Gasverdichter-Einheit nachgeordnet vorhandene Systemkomponente mit einem im System höchsten Druckniveau zu versorgen, wobei das Druckniveau im Betrieb dynamisch-flexibel anpassbar ist.

9. System (1) nach einem der vorhergehenden Ansprüche 1 und 3 bis 8, **dadurch gekennzeichnet, dass** die Zuführvorrichtung (2) eine Gasverdichter-Einheit aufweist.

10. System (1) nach einem der vorhergehenden Ansprüche 1 und 3 bis 9, **dadurch gekennzeichnet, dass** das Verarbeitungsgerät (3) eine Gasverdichter-Einheit aufweist.

11. System (1) nach einem der vorhergehenden Ansprüche, **dadurch gekennzeichnet, dass** die Gasverdichter-Einheit (23) einen elektrischen Antrieb aufweist.

12. System (1) nach einem der vorhergehenden Ansprüche, **dadurch gekennzeichnet, dass** die Gasverdichter-Einheit einen mechanischen Antrieb aufweist.

## Claims

1. System (1, 1') for processing elements, wherein the elements are connecting elements, joining elements such as screws and rivets, self-piercing rivets, clinch rivets and/or functional elements such as self-piercing, punch-in, press-in, stamp-in nuts and/or self-piercing, punch-in, press-in or stamp-in bolts, comprising a feed device (2), a processing device (3) and a hollow transport line (4), wherein the feed device (2) and the processing device (3) are connected to one another via the hollow transport line (4), wherein the processing device (3) is designed to process elements, wherein the feed device (2) is designed to receive a plurality of elements and transfer them to the hollow transport line (4), wherein the elements can be transported to the processing device (3) via the hollow transport line (4) in order to supply the processing device (3) with the elements, wherein a pneumatically operable system component for operating the system (1, 1') is provided, wherein the system (1) comprises a gas compressor unit (23) for generating and supplying compressed and/or accelerated pressurized air, wherein the gas compressor unit (23) is provided in an installation space in which the system (1) is accommodated, wherein the gas compressor unit (23) is designed to take in air from the environment of the processing device (3) and/or from the environment of the feed device (2) in the installation space and to supply compressed and/or accelerated pressurized air for the pneumatically operable system component for the operation of the feed device (2) and for the operation of the processing device (3), **characterized in that** a plurality of gas compressor units are provided, wherein two gas compressor units are provided, wherein the two gas compressor units differ from one another in terms of construction and/or the principle of operation.

2. System for press-joining a material, comprising a press-joining device, wherein the press-joining device is designed for press-joining, wherein the system (1) is provided in an installation space, wherein a pneumatically operable system component for operating the press-joining device is provided, wherein the system (1) comprises a gas compressor unit for generating and supplying a compressed and/or accelerated gas volume, wherein the gas compressor unit is provided in the installation space, wherein the gas compressor unit is designed to take in air from the environment of the press-joining device in the installation space and to supply compressed and/or accelerated pressurized air for the pneumatically operable system component for the operation of the press-joining device, **characterized in that** a plurality of gas compressor units are provided, wherein two gas compressor units are provided, wherein the two gas compressor units differ from one another in terms of construction and/or the principle of operation.

3. System (1) according to Claim 1, **characterized in that** the pneumatically operable system component for operating the processing device (3) comprises an element filling station and/or a tool changing station.

4. System (1) according to one of the preceding claims, **characterized in that** a gas compressor unit (23) is designed to supply pressurized air at different pressure levels.

5. System (1) according to one of the preceding claims, **characterized in that** one gas compressor unit (23) which operates according to the dynamic compressor principle is provided, and **in that** one gas compressor unit which operates according to the positive displacement principle is provided.

6. System (1) according to one of the preceding claims, **characterized in that** the gas compressor unit (23) is designed to supply a pressure level which is below a pressure level that is 0.3 bar above an initial pressure, or which is below a pressure level that is 0.2 bar above an initial pressure, or which is below a pressure level that is 0.1 bar above an initial pressure, wherein the gas compressor unit operates according to the positive displacement principle.

7. System (1) according to one of the preceding claims, **characterized in that** the gas compressor unit is adapted to supply a system component arranged downstream of the gas compressor unit with a maximum system pressure level.

8. System (1) according to one of the preceding claims, **characterized in that** the gas compressor unit is adapted to supply a system component arranged downstream of the gas compressor unit with a maximum system pressure level, wherein the pressure level can be adapted in a dynamically flexible manner during operation.

9. System (1) according to one of the preceding Claims 1 and 3 to 8, **characterized in that** the feed device (2) has a gas compressor unit.

10. System (1) according to one of the preceding Claims 1 and 3 to 9, **characterized in that** the processing device (3) has a gas compressor unit.

11. System (1) according to one of the preceding claims, **characterized in that** the gas compressor unit (23) has an electric drive.

12. System (1) according to one of the preceding claims, **characterized in that** the gas compressor unit has a mechanical drive.

## Revendications

1. Système (1, 1') pour la mise en œuvre d'éléments, les éléments étant des éléments de liaison, des éléments d'assemblage tels que les vis et les rivets, les rivets autoperforants, les rivets clinch et des éléments fonctionnels, tels que les écrous autoperforants, à sertir, encastrés, estampés et/ou les boulons autoperforants, à sertir, encastrés ou estampés, comprenant un dispositif d'alimentation (2), un appareil de mise en œuvre (3) et un conduit de transport creux (4), le dispositif d'alimentation (2) et l'appareil de mise en œuvre (3) étant reliés l'un à l'autre par l'intermédiaire du conduit de transport creux (4), l'appareil de mise en œuvre (3) étant conçu pour la mise en œuvre d'éléments, le dispositif d'alimentation (2) étant conçu pour recevoir une multitude d'éléments et pour les transférer au conduit de transport creux (4), les éléments étant transportables par l'intermédiaire du conduit de transport creux (4) vers l'appareil de mise en œuvre (3) afin d'alimenter l'appareil de mise en œuvre (3) en éléments, un composant de système pouvant être actionné pneumatiquement pour le fonctionnement du système (1, 1') étant présent, le système (1) comprenant une unité compresseur à gaz (23) pour la génération et la mise à disposition d'air sous pression comprimé et/ou accéléré, l'unité compresseur à gaz (23) étant présente dans un espace de montage dans lequel le système (1) est logé, l'unité compresseur à gaz (23) étant conçu pour aspirer de l'air à partir de l'environnement de l'appareil de mise en œuvre (3) et/ou à partir de l'environnement du dispositif d'alimentation (2) dans l'espace de montage et pour mettre à disposition de l'air sous pression comprimé et/ou accéléré pour le composant de système pouvant être actionné pneumatiquement pour le fonctionnement du dispositif d'alimentation (2) et pour le fonctionnement de l'appareil de mise en œuvre (3), **caractérisé en ce que** plusieurs unités compresseur à gaz sont présentes, deux unités compresseur à gaz étant présentes, les deux unités compresseur à gaz se distinguant l'une de l'autre par leur construction et/ou leur principe de fonctionnement.

2. Système pour l'assemblage par clinchage d'un matériau, comprenant un appareil d'assemblage par clinchage, l'appareil d'assemblage par clinchage étant conçu pour l'assemblage par clinchage, le système (1) étant présent dans un espace de montage, un composant du système pouvant être actionné pneumatiquement pour le fonctionnement de l'appareil d'assemblage par clinchage étant présent, le système (1) comprenant une unité compresseur à gaz pour la génération et la mise à disposition d'un volume de gaz comprimé et/ou accéléré, l'unité compresseur à gaz étant présente dans l'espace de montage, l'unité compresseur à gaz étant conçue pour aspirer de l'air à partir de l'environnement de l'appareil d'assemblage par clinchage dans l'espace de montage et pour mettre à disposition de l'air sous pression comprimé et/ou accéléré pour le composant de système pouvant être actionné pneumatiquement pour le fonctionnement de l'appareil d'assemblage par clinchage, **caractérisé en ce que** plusieurs unités compresseur à gaz sont présentes, deux unités compresseur à gaz étant présentes, les deux unités compresseur à gaz se distinguant l'une de l'autre par leur construction et/ou leur principe de fonctionnement.

3. Système (1) selon la revendication 1, **caractérisé en ce que** le composant de système pouvant être actionné pneumatiquement comprend, pour le fonctionnement de l'appareil de mise en œuvre (3), un poste de remplissage d'éléments et/ou un poste de remplacement d'outil.

4. Système (1) selon l'une des revendications précédentes, **caractérisé en ce qu'**une unité compresseur à gaz (23) est conçue pour mettre à disposition de l'air sous pression à des différents niveaux de pression.

5. Système (1) selon l'une des revendications précédentes, **caractérisé en ce qu'**une unité compresseur à gaz (23) est présente, qui fonctionne selon le principe de compression dynamique et **en ce qu'**une unité compresseur à gaz est présente, qui fonctionne selon le principe volumétrique.

6. Système (1) selon l'une des revendications précédentes, **caractérisé en ce que** l'unité compresseur à gaz (23) est conçue pour la mise à disposition d'un niveau de pression qui est inférieur à un niveau de pression qui se situe à 0,3 bar au-dessus d'une pression de départ ou qui est inférieur à un niveau de pression qui se situe à 0,2 bar au-dessus d'une pression de départ ou qui est inférieur à un niveau de pression qui se situe à 0,1 bar au-dessus d'une pression de départ, l'unité compresseur à gaz fonctionnant selon le principe volumétrique.

7. Système (1) selon l'une des revendications précédentes, **caractérisé en ce que** l'unité compresseur à gaz est conçue pour alimenter un composant de système présent, disposé en aval de l'unité compresseur à gaz, en niveau de pression le plus élevé dans le système.

8. Système (1) selon l'une des revendications précédentes, **caractérisé en ce que** l'unité compresseur à gaz est conçue pour alimenter un composant de système présent, disposé en aval de l'unité compresseur à gaz, en niveau de pression le plus élevé dans le système, le niveau de pression pouvant être adapté de manière dynamique-souple lors du fonctionnement.

9. Système (1) selon l'une des revendications précédentes 1 et 3 à 8, **caractérisé en ce que** le dispositif d'alimentation (2) présente une unité compresseur à gaz.

10. Système (1) selon l'une des revendications précédentes 1 et 3 à 9, **caractérisé en ce que** l'appareil de mise en œuvre (3) présente une unité compresseur à gaz.

11. Système (1) selon l'une des revendications précédentes, **caractérisé en ce que** l'unité compresseur à gaz (23) présente un entraînement électrique.

12. Système (1) selon l'une des revendications précédentes, **caractérisé en ce que** l'unité compresseur à gaz présente un entraînement mécanique.
